(19) **Europäisches Patentamt / European Patent Office / Office européen des brevets**

(11) **EP 2 604 834 A1**

(12) **EUROPEAN PATENT APPLICATION**
published in accordance with Art. 153(4) EPC

(43) Date of publication:
**19.06.2013 Bulletin 2013/25**

(21) Application number: **10855910.5**

(22) Date of filing: **10.08.2010**

(51) Int Cl.:
**F02D 45/00** (2006.01)

(86) International application number:
**PCT/JP2010/063800**

(87) International publication number:
**WO 2012/020509 (16.02.2012 Gazette 2012/07)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(71) Applicant: **TOYOTA JIDOSHA KABUSHIKI
KAISHA
Aichi-ken,
471-8571 (JP)**

(72) Inventor: **IBUKI, Taku
Toyota-shi, Aichi-ken 471-8571 (JP)**

(74) Representative: **Jackson, Martin Peter
J A Kemp
14 South Square
Gray's Inn
London WC1R 5JJ (GB)**

(54) **CONTROL DEVICE FOR INTERNAL COMBUSTION ENGINE**

(57)    The present invention relates to a control device for an internal combustion engine including: a first control subject 52 and a second control subject 35D respectively capable of directly controlling a first control amount Regr and a second control amount Pim interacting with each other; a means for setting a target value of the first control amount as a first target control amount and setting a target value of the second control amount as a second target control amount; and a means for controlling the first control amount at the first target control amount and controlling the second control amount at the second target control amount. Further, in the present invention, a first target control amount TRegr is set as the target value of the first control amount capable of controlling the first control amount with a predetermined followability taking account of at least one of a first operation speed Krie, Krde as the operation speed of the first control subject and a degree of influence Ksee of the first control subject on the first control amount and at least one of a second operation speed Kriv, Krdv as the operation speed of the second control subject and a degree of influence Ksev of the second control subject on the first control amount.

CALCULATE TARGET EGR RATIO AND
TARGET SUPERCHARGING PRESSURE

ACQUIRE Regr, Pim — 10

AQUIRE De, Dp — 11

ACQUIRE Ke, Kp — 12

CALCULATE TRegr, TPim — 13

RETURN

FIG.6

**Description**

Technical Field

The present invention relates to a control device for an internal combustion engine.

Background Art

Patent Document 1 discloses a control device which controls a supercharging pressure (specifically, a pressure of a gas increased by a supercharger) in an internal combustion engine including a supercharger which increases a pressure of a gas suctioned into a combustion chamber. The supercharger disclosed in Patent Document 1 includes a vane which may control a supercharging pressure in a changeable manner. Further, the supercharging pressure is controlled at a target supercharging pressure by controlling the operation of the vane.

In a case where an actual supercharging pressure is controlled at a target value (hereinafter, the target value is referred to as "target supercharging pressure") by a PID control, since the operation of the vane significantly changes when the derivative term significantly changes in the PID control, the followability of the actual supercharging pressure with respect to the target supercharging pressure is degraded. Therefore, in the control device disclosed in Patent Document 1, the derivative term in the PID control is corrected based on the target supercharging pressure and the actual supercharging pressure so as to improve the followability of the actual supercharging pressure with respect to the target supercharging pressure.

CITATION LIST

PATENT DOCUMENTS

Patent Document 1: JP 2009-275620 A
Patent Document 2: JP 2001-355501 A
Patent Document 3: JP H11-13511 A
Patent Document 4: JP 2008-31951 A

DISCLOSURE OF THE INVENTION

Problems to be Solved by the Invention

As disclosed in Patent Document 3, there is known an internal combustion engine with an exhaust gas recirculation device (hereinafter, the device is referred to as "EGR device") which introduces an exhaust gas into a combustion chamber by introducing the exhaust gas discharged from the combustion chamber to an exhaust passageway into an intake passageway. Further, the EGR device includes a control valve (hereinafter, the control valve is referred to as "EGR control valve") which controls the amount of the exhaust gas introduced into the intake passageway in a changeable manner by the EGR device.

In the internal combustion engine with the EGR device and the supercharger disclosed in Patent Document 1, it is possible to control the amount (hereinafter, the amount of the exhaust gas is referred to as "EGR gas amount") of the exhaust gas introduced into the intake passageway by controlling the operation of the EGR control valve and to control the supercharging pressure by controlling the operation of the vane. The EGR gas amount significantly influences the supercharging pressure and the supercharging pressure influences the EGR gas amount. Accordingly, in the case where the target value (hereinafter, the target value is referred to as "target EGR gas amount") of the EGR gas amount is set, when the target EGR gas amount is set without taking account of the influence of the supercharging pressure on the EGR gas amount, there is a possibility that the EGR gas amount may not be controlled at the target EGR gas amount with a sufficient followability. Of course, even in the case where the target supercharging pressure is set, when the target supercharging pressure is set without taking account of the influence of the EGR gas amount on the supercharging pressure, there is a possibility that the supercharging pressure may not be controlled at the desired target supercharging pressure with a sufficient followability.

Specifically, in the internal combustion engine including the EGR device which controls the EGR gas amount and the supercharging pressure interacting with each other and the supercharger, in the case where the target value (specifically, the target EGR gas amount) of the EGR gas amount directly controlled by the EGR device and the target value (specifically, the target supercharging pressure) of the supercharging pressure directly controlled by the supercharger are set, when the target EGR gas amount is set without taking account of the influence of the supercharging pressure on the EGR gas amount or the target supercharging pressure is set without taking account of the influence of the EGR gas amount with respect to the supercharging pressure, there is a possibility that the EGR gas amount or the supercharging pressure may not be controlled at the target EGR gas amount or the target supercharging pressure with a sufficient followability.

In a broad sense, the same applies to a case where the target value (hereinafter, the target value is referred to as "target control amount") of the control amount directly controlled by each control subject is set in the internal combustion engine including different control subjects respectively controlling the control amounts interacting with each other.

Therefore, it is an object of the present invention to control the control amount directly controlled by each control subject at each corresponding target control amount with a sufficient followability in the internal combustion engine including different control subjects respectively controlling the control amounts interacting with each other.

Means for Solving Problems

A first aspect of the present invention relates to a control device for an internal combustion engine including two different control subjects as a first control subject and a second control subject respectively capable of directly controlling a first control amount and a second control amount as two different control amounts interacting with each other, the control device for an internal combustion engine including: a target value setting means for setting a target value of the first control amount as a first target control amount and setting a target value of the second control amount as a second target control amount; and a control amount control means for controlling the first control amount at the first target control amount by controlling an operation state of the first control subject and controlling the second control amount at the second target control amount by controlling an operation state of the second control subject.

Further, in this aspect, the first target control amount is set as the target value of the first control amount capable of controlling the first control amount with a predetermined followability taking account of at least one of a first operation speed as an operation speed of the first control subject when the control amount control means gives an instruction for changing the operation state of the first control subject to the first control subject and a degree of influence of the first control subject on the first control amount as a degree of influence on the first control amount due to a change in the operation state of the first control subject and at least one of a second operation speed as an operation speed of the second control subject when the control amount control means gives an instruction for changing the operation state of the second control subject to the second control subject and a degree of influence of the second control subject on the first control amount as a degree of influence on the first control amount due to a change in the operation state of the second control subject.

According to the present invention, the following effect may be obtained. The operation state of the first control subject is changed when the first control amount is changed so that the first control amount is controlled at the first target control amount. Further, the change amount (hereinafter, the change amount is referred to as "target change amount") which is a target of the change amount of the operation state of the first control subject is generally set as the amount in accordance with the deviation of the first current control amount with respect to the first target control amount. Here, since the operation state of the first control subject may be changed by the target change amount in a short time when the operation speed of the first control subject is fast, the first control amount may reach the first target control amount with a sufficient followability. Further, when a degree of influence of the first control subject on the first control amount is large, the first control amount may reach the first target control amount even at a small change amount of the operation state of the first control subject. Specifically, when a degree of influence of the first control subject on the first control amount is large, the operation state of the first control subject may be changed by the target change amount in a short time, and hence the first control amount may reach the first target control amount with a sufficient followability.

Meanwhile, when the operation speed of the first control subject is slow or a degree of influence of the first control subject on the first control amount is small, the operation state of the first control subject may not be changed by the target change amount in a short time, and hence the first control amount may not reach the first target control amount with a sufficient followability. Further, when the control of the first control amount is repeated, the first control amount largely deviates from the preferable first control amount. Further, since the first control amount is the control amount to be controlled, it is possible to seem that the first control amount may is the control amount to be controlled to exhibit the specific performance demanded in the internal combustion engine. Accordingly, when the first control amount largely deviates from the preferable first control amount, the internal combustion engine may not exhibit the aforementioned specific performance.

Accordingly, in the case where the first control amount is changed so that the first control amount is controlled at the first target control amount, in order to set the first target control amount causing the first control amount to reach the first target control amount with a sufficient followability, it is important to take account of at least one of the operation speed of the first control subject and a degree of influence of the first control subject on the first control amount.

Further, in addition to this, the first control amount and the second control amount are the control amounts interacting with each other. Accordingly, the operation state of the second control subject capable of directly controlling the second control amount also influences the first control amount. For this reason, as aforementioned above, in order to set the first target control amount causing the first control amount to reach the first target control amount with a sufficient followability, it is important to take account of at least one of the operation speed of the second control subject and a degree of influence of the second control subject on the first control amount.

Here, in the present invention, the first target control amount causing the first control amount to reach the first target control amount with a sufficient followability is set taking account of not only at least one of the operation speed of the first control subject and a degree of influence of the first control subject on the first control amount as the parameter influencing the followability of the first control amount with respect to the first target control amount, but also at least one of the operation speed of the second control subject and a degree of influence of the second control subject on the first control amount which may not directly control the first control amount but influence the first control amount as the parameter influencing the followability of the first control amount with respect to the first target control amount, and the first control amount is controlled at the first target control amount. Accordingly, according to the present invention, it is possible to obtain an effect that the first control amount is controlled at the first target control amount with a sufficient followability. Further, as a result, at least the first control amount does not largely deviate from the preferable first control amount, and hence it is possible to obtain an effect that the internal combustion engine may exhibit the aforementioned specific performance.

According to a second aspect of the present invention, in the aforementioned first aspect, assuming that the first operation speed when the operation state of the first control subject is changed so as to increase the first control amount is referred to as a first increase operation speed and the first operation speed when the operation state of the first control subject is changed so as to decrease the first control amount is referred to as a first decrease operation speed, in the case where the first operation speed when the operation state of the first control subject is changed so as to increase the first control amount so that the first control amount is controlled at the first target control amount is taken into account in the setting of the first target control amount, the first increase operation speed is taken into account as the first operation speed in the setting of the first target control amount.

Meanwhile, in this aspect, in the case where the first operation speed when the operation state of the first control subject is changed so as to decrease the first control amount so that the first control amount is controlled at the first target control amount is taken into account in the setting of the first target control amount, the first decrease operation speed is taken into account as the first operation speed in the setting of the first target control amount.

According to the present invention, the following effect may be obtained. There may be a case where the operation speed of the first control subject (specifically, the first increase operation speed) when the operation state of the first control subject is changed so as to increase the first control amount is different from the operation speed of the first control subject (specifically, the first decrease operation speed) when the operation state of the first control subject is changed so as to decrease the first control amount. Here, in the present invention, in the case where the operation speed of the first control subject when the operation state of the first control subject is changed so as to increase the first control amount is taken into account in the setting of the first target control amount, the first target control amount is set taking account of the first increase operation speed. Then, in the case where the operation speed of the first control subject when the operation state of the first control subject is changed so as to decrease the first control amount is taken into account in the setting of the first target control amount, the first target control amount is set taking account of the first decrease operation speed. For this reason, it is possible to obtain an effect that the first control amount may be further reliably controlled at the first target control amount with a sufficient followability.

According to a third aspect of the present invention, in the aforementioned first or second aspect, assuming that the second operation speed when the operation state of the second control subject is changed so as to increase the second control amount is referred to as a second increase operation speed and the second operation speed when the operation state of the second control subject is changed so as to decrease the second control amount is referred to as a second decrease operation speed, in the case where the second operation speed when the operation state of the second control subject is changed so as to increase the second control amount so that the second control amount is controlled at the second target control amount is taken into account in the setting of the first target control amount, the second increase operation speed is taken into account as the second operation speed in the setting of the first target control amount.

Meanwhile, in this aspect, in the case where the second operation speed when the operation state of the second control subject is changed so as to decrease the second control amount so that the second control amount is controlled at the second target control amount is taken into account in the setting of the first target control amount, the second decrease operation speed is taken into account as the second operation speed in the setting of the first target control amount.

According to the present invention, the following effect may be obtained. There may be a case where the operation speed of the second control subject (specifically, the second increase operation speed) when the operation

4

state of the second control subject is changed so as to increase the second control amount is different from the operation speed of the second control subject (specifically, the second decrease operation speed) when the operation state of the second control subject is changed so as to decrease the second control amount. Here, in the present invention, in the case where the operation speed of the second control subject when the operation state of the second control subject is changed so as to increase the second control amount is taken into account in the setting of the first target control amount, the first target control amount is set taking account of the second increase operation speed. In the case where the operation speed of the second control subject when the operation state of the second control subject is changed so as to decrease the second control amount is taken into account in the setting of the first target control amount, the first target control amount is set taking account of the second decrease operation speed. For this reason, it is possible to obtain an effect that the first control amount is further reliably controlled at the first target control amount with a sufficient followability.

According to a fourth aspect of the present invention, in any one of the aforementioned first through third aspects, the target value of the first control amount in accordance with the operation state of the internal combustion engine when the operation state of the internal combustion engine is in a constant operation state is set as a first target constant control amount.

Further, in this aspect, an index representing the possibility that the first current control amount is controlled at the first target constant control amount with the predetermined followability when the first current control amount is controlled at the first target constant control amount set in accordance with the current operation state of the internal combustion engine on assumption that the current operation state of the internal combustion engine is in the constant operation state is calculated as a first following index based on at least one of the first operation speed and a degree of influence of the first control subject on the first control amount and at least one of the second operation speed and a degree of influence of the second control subject on the first control amount, and the first target control amount is set in accordance with the first following index; so that at least one of the first operation speed and a degree of influence of the first control subject on the first control amount and at least one of the second operation speed and a degree of influence of the second control subject on the first control amount are taken into account in the setting of the first target control amount.

According to the present invention, the following effect may be obtained. When the operation state of the internal combustion engine changes from a certain state to a different state, the first control amount needs to be changed. At this time, the target value of the first control amount to be attained at last is the target value of the first control amount, and specifically, the first target constant control amount at the constant operation state when the operation state of the internal combustion engine becomes the different state. Here, in the present invention, the first target constant control amount is taken into account in the form of the deviation of the first current control amount with respect to the first target constant control amount in the setting of the first target control amount until the operation state of the internal combustion engine changes to the constant operation state. For this reason, according to the present invention, it is possible to obtain an effect that the first control amount is promptly controlled at the first target constant control amount when the operation state of the internal combustion engine changes to the constant operation state.

According to a fifth aspect of the present invention, in the aforementioned fourth aspect, the deviation of the first current control amount with respect to the first target constant control amount set in accordance with the current operation state of the internal combustion engine on assumption that the current operation state of the internal combustion engine is the constant operation state is calculated as a first control amount deviation. Further, a value in which the first control amount deviation is corrected in accordance with the first following index is calculated as a first control amount correction deviation. Furthermore, a value in which the first control amount correction deviation is added to the first current control amount is set as the first target control amount, so that at least one of the first operation speed and a degree of influence of the first control subject on to the first control amount and at least one of the second operation speed and a degree of influence of the second control subject on the first control amount are taken into account in the setting of the first target control amount.

According to the present invention, the following effect may be obtained. As described in the fourth aspect, the target value of the first control amount to be attained at last when the operation state of the internal combustion engine is changed from a certain state to a different state is the first target constant control amount. Further, in the present invention, the first target constant control amount is directly reflected in the first current control amount in the form of the deviation of the first current control amount with respect to the first target constant control amount in the setting of the first target control amount when the operation state of the internal combustion engine is changed to the constant operation state. For this reason, according to the present invention, it is possible to obtain an effect that the first control amount is promptly controlled at the first target constant control amount when the operation state of the internal combustion engine is changed to the constant operation state.

According to a sixth aspect of the present invention, in the aforementioned fifth aspect, when the first control amount deviation is smaller than a predetermined value, a value in which the first control amount deviation is added to the first current control amount is set as the first target control amount.

According to the present invention, the following effect may be obtained. When the first control amount deviation is smaller than the predetermined value, at least the operation state change of the first control subject (or the second control subject) may be small so as to cause at least the first control amount to reach the first target constant control amount. Accordingly, in this case, even when the first target constant control amount is set as the first target control amount, the first control amount may reach the first target control amount with a sufficient followability. In the present invention, when the first control amount deviation is smaller than the predetermined value, a value in which the first control amount deviation is added to the first current control amount, and specifically, the first target constant control amount is set as the first target control amount. Accordingly, according to the present invention, it is possible to obtain an effect that the first control amount is further reliably controlled at the first target constant control amount when the operation state of the internal combustion engine is changed to the constant operation state.

According to a seventh aspect of the present invention, in any one of the aforementioned first through sixth aspects, the second target control amount is set as the target value of the second control amount capable of controlling the second control amount with a predetermined followability taking account of at least one of the first operation speed and a degree of influence of the first control subject on the second control amount as the degree of the influence on the second control amount due to a change in the operation state of the first control subject and at least one of the second operation speed and a degree of influence of the second control subject on the second control amount as the degree of the influence on the second control amount due to a change in the operation state of the second control subject.

According to the present invention, the following effect may be obtained. Due to the same reason as that of the first aspect, in the case where the second control amount is changed so that the second control amount is controlled at the second target control amount, in order to set the second target control amount causing the second control amount to reach the second target control amount with a sufficient followability, it is important to take account of at least one of the operation speed of the second control subject and a degree of influence of the second control subject on the second control amount.

Further, in addition to this, due to the same reason as that of the first aspect, in order to set the second target control amount causing the second control amount to reach the second target control amount with a sufficient followability, it is important to take account of at least one of the operation speed of the first control subject and a degree of influence of the first control subject on the second control amount.

Here, in the present invention, the second target control amount causing the second control amount to reach the second target control amount with a sufficient followability is set taking account of not only at least one of the operation speed of the second control subject and a degree of influence of the second control subject on the second control amount as the parameter influencing the followability of the second control amount with respect to the second target control amount, but also at least one of the operation speed of the first control subject and a degree of influence of the first control subject on the second control amount as the parameter influencing the followability of the second control amount with respect to the second target control amount, and the second control amount is controlled at the second target control amount. Accordingly, according to the present invention, in addition to the effect obtained from the first aspect, it is possible to obtain an effect that the second control amount is also controlled at the second target control amount with a sufficient followability. Further, as a result, at least the second control amount does not largely deviate from the preferable second control amount, and hence it is possible to obtain an effect that the internal combustion engine may exhibit a specific performance acquired by the contribution of the second control amount.

According to an eighth aspect of the present invention, in the aforementioned seventh aspect, assuming that the second operation speed when the operation state of the second control subject is changed so as to increase the second control amount is referred to as a second increase operation speed and the second operation speed when the operation state of the second control subject is changed so as to decrease the second control amount is referred to as a second decrease operation speed, in the case where the second operation speed when the operation state of the second control subject is changed so as to increase the second control amount so that the second control amount is controlled at the second target control amount is taken into account in the setting of the second target control amount, the second increase operation speed is taken into account as the second operation speed in the setting of the second target control amount.

Meanwhile, in this aspect, in the case where the second operation speed when the operation state of the second control subject is changed so as to decrease the second control amount so that the second control amount is controlled at the second target control amount is taken into account in the setting of the second target control amount, the second decrease operation speed is taken into account as the second operation speed in the setting of the second target control amount.

According to the present invention, the following effect may be obtained. As described in the third aspect, there is a case where the second increase operation speed may be different from the second decrease operation speed. Here, in the present invention, in the case where the operation speed of the second control subject when the operation state of the second control subject is changed so as to increase the second control amount is taken into account in the setting of the second target control amount, the second target control amount is set taking account of the second increase operation speed. In the case where the operation speed of the second control subject when the operation state of the second control subject is changed so as to decrease the second control amount is taken into account in the setting of the second target control amount, the second target control amount is set taking account of the second decrease operation speed. For this reason, it is possible to obtain an effect that the second control amount is further reliably controlled at the second target control amount with a sufficient followability.

According to a ninth aspect of the present invention, in the aforementioned seventh or eighth aspect, assuming that the first operation speed when the operation state of the first control subject is changed so as to increase the first control amount is referred to as a first increase operation speed and the first operation speed when the operation state of the first control subject is changed so as to decrease the first control amount is referred to as a first decrease operation speed, in the case where the first operation speed when the operation state of the first control subject is changed so as to increase the first control amount so that the first control amount is controlled at the first target control amount is taken into account in the setting of the second target control amount, the first increase operation speed is taken into account as the first operation speed in the setting of the second target control amount.

Meanwhile, in this aspect, in the case where the first operation speed when the operation state of the first control subject is changed so as to decrease the first control amount so that the first control amount is controlled at the first target control amount is taken into account in the setting of the second target control amount, the first decrease operation speed is taken into account as the first operation speed in the setting of the second target control amount.

According to the present invention, the following effect may be obtained. As described in the second aspect, there is a case where the first increase operation speed may be different from the first decrease operation speed. Here, in the present invention, in the case where the operation speed of the first control subject when the operation state of the first control subject is changed so as to increase the first control amount is taken into account in the setting of the second target control amount, the second target control amount is set taking account of the first increase operation speed. Then, in the case where the operation speed of the first control subject when the operation state of the first control subject is changed so as to decrease the first control amount is taken into account in the setting of the second target control amount, the second target control amount is set taking account of the first decrease operation speed. For this reason, it is possible to obtain an effect that the second control amount is further reliably controlled at the second target control amount with a sufficient followability.

According to a tenth aspect of the present invention, in any one of the aforementioned seventh through ninth aspects, the target value of the second control amount in accordance with the operation state of the internal combustion engine when the operation state of the internal combustion engine is in the constant operation state is set as a second target constant control amount.

Further, in this aspect, an index representing the possibility that the second current control amount is controlled at the second target constant control amount with the predetermined followability when the second current control amount is controlled at the second target constant control amount set in accordance with the current operation state of the internal combustion engine on assumption that the current operation state of the internal combustion engine is in the constant operation state is calculated as a second following index based on at least one of the first operation speed and a degree of influence of the first control subject on the second control amount and at least one of the second operation speed and a degree of influence of the second control subject on the second control amount, and the second target control amount is set in accordance with the second following index; so that at least one of the first operation speed and a degree of influence of the first control subject on the second control amount and at least one of the second operation speed and a degree of influence of the second control subject on the second control amount are taken into account in the setting of the second target control amount.

According to the present invention, the following effect may be obtained. When the operation state of the internal combustion engine changes from a certain state to a different state, the second control amount needs to be changed. At this time, the target value of the second control amount to be attained finally is the target value of the second control amount, and specifically, the second target constant control amount when the operation state of the internal combustion engine changes to the constant operation state in the different state. Here, in the present invention, the second target constant control amount is taken into account in the form of the deviation of the second current control amount with respect to the second target constant control amount in the setting of the second target control amount until the operation state of the internal combustion engine changes to the constant operation state. For this reason, according to the present invention, it is possible to obtain an effect that the second control amount is promptly controlled at the second target constant control amount when the operation state of the internal combustion engine is changed to the constant operation state.

According to an eleventh aspect, in the aforementioned tenth aspect, the deviation of the second current control amount with respect to the second target constant control amount set in accordance with the current operation state of the internal combustion engine on assumption that the current operation state of the internal combustion engine is the constant operation state is calculated as a second control amount deviation. Further, a value in which the second control amount deviation is corrected in accordance with the second following index is calculated as a second control amount correction deviation. Furthermore, a value in which the second control amount correction deviation is added to the second current control amount is set as the second target control amount, so that at least one of the first operation speed and a degree of influence of the first control subject on the second control amount and at least one of the second operation speed and a degree of influence of the second control subject on the second control amount are taken into account in the setting of the second target control amount.

According to the present invention, the following effect may be obtained. As described in the tenth aspect, the target value of the second control amount to be attained finally is the second target constant control amount when the operation state of the internal combustion engine is changed from a certain state to a different state. Further, in the present invention, the second target constant control amount is directly reflected in the second current control amount in the form of the deviation of the second current control amount with respect to the second target constant control amount in the setting of the second target control amount until the operation state of the internal combustion engine changes to the constant operation state. For this reason, according to the present invention, it is possible to obtain an effect that the second control amount is promptly controlled at the second target constant control amount when the operation state of the internal combustion engine is changed to the constant operation state.

According to a twelfth aspect of the present invention, in the aforementioned eleventh aspect, when the second control amount deviation is smaller than a predetermined value, a value in which the second control amount deviation is added to the second current control amount is set as the second target control amount.

According to the present invention, the following effect may be obtained. When the second control amount deviation is smaller than the predetermined value, at least the operation state change of the second control subject (or the first control subject) may be small so that at least the second control amount reaches the second target constant control amount. Accordingly, in this case, even when the second target constant control amount is set as the second target control amount, the second control amount may reach the second target control amount with a sufficient followability. In the present invention, when the second control amount deviation is smaller than the predetermined value, a value in which the second control amount deviation is added to the second current control amount, and specifically, the second target constant control amount is set as the first target control amount. Accordingly, according to the present invention, it is possible to obtain an effect that the second control amount is further reliably controlled at the second target constant control amount when the operation state of the internal combustion engine is changed to the constant operation state.

BRIEF DESCRIPTION OF DRAWINGS

FIG. 1 is an overall diagram of an internal combustion engine which adopts a control device of the present invention;

FIG. 2 is a diagram illustrating the inside of an exhaust turbine of a supercharger of the internal combustion engine illustrated in FIG. 1;

FIG. 3(A) is a diagram illustrating a map which is used to acquire a target constant supercharging pressure TPims based on an engine rotation speed N and an engine load L and FIG. 3(B) is a diagram illustrating a map which is used to acquire a target constant oxygen concentration TO2s based on an engine rotation speed N and an engine load L;

FIG. 4 (A) is a diagram illustrating a map which is used to acquire an EGR ratio addition coefficient Ke based on an EGR ratio control difficulty level De and FIG. 4(B) is a diagram illustrating a map which is used to acquire a supercharging pressure addition coefficient Kp based on a supercharging pressure control difficulty level Dp;

FIG. 5 is a diagram illustrating a map which is used to acquire a target constant EGR ratio TRegrs based on the engine rotation speed N and the engine load L;

FIG. 6 is a diagram illustrating an example of a routine which executes the setting of a target EGR ratio and a target supercharging pressure according to an embodiment of the present invention;

FIG. 7(A) is a diagram illustrating a relation between an EGR control valve opening degree and an EGR ratio change amount, FIG. 7(B) is a diagram illustrating a relation between a vane opening degree and an EGR ratio change amount, and FIG. 7(C) is a diagram illustrating a relation between a throttle valve opening degree and an EGR ratio change amount;

FIG. 8(A) is a diagram illustrating a relation between a vane opening degree and a supercharging pressure change amount, FIG. 8(B) is a diagram illustrating a relation between an EGR control valve opening degree and a supercharging pressure change amount, and FIG. 8(C) is a diagram illustrating a relation between a throttle valve opening degree and a supercharging pressure change amount;

FIG. 9 is a diagram illustrating a part of an example of a routine which calculates a control difficulty level according to the embodiment of the present invention;

FIG. 10 is a diagram illustrating a part of an example of a routine which calculates a control difficulty level according to the embodiment of the present invention;

FIG. 11 is a diagram illustrating a part of an example of a routine which calculates a control difficulty level according to the embodiment of the present invention;

FIG. 12 is a diagram illustrating a part of an example of a routine which calculates a control difficulty level according to the embodiment of the present invention; and

FIG. 13 is a diagram illustrating engine operation state regions which are divided by an EGR ratio deviation and a supercharging pressure deviation.

DETAILED DESCRIPTION OF THE INVENTION

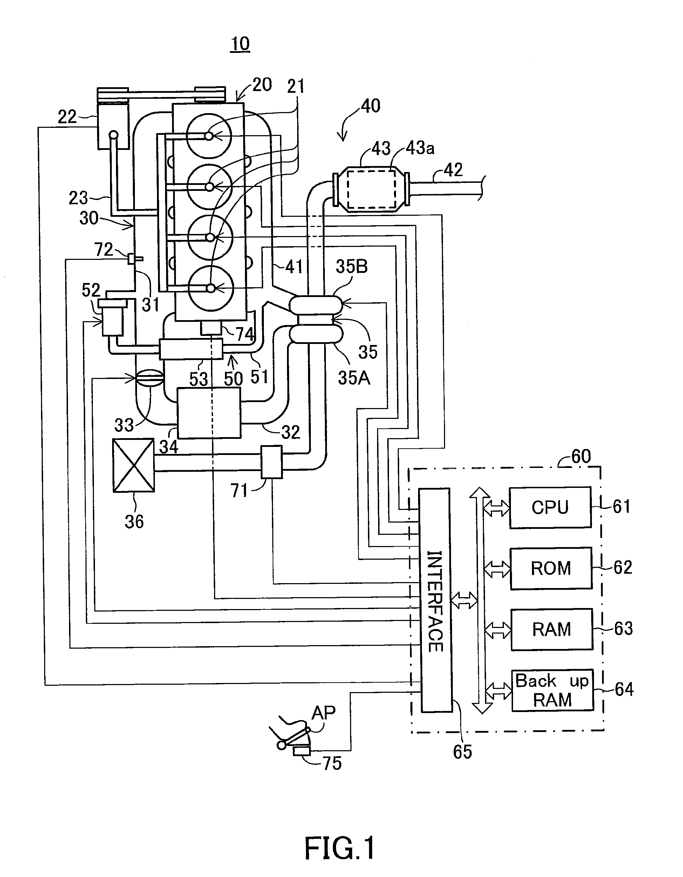

Hereinafter, an embodiment of the present invention will be described with referring to the drawings. FIG. 1 illustrates an internal combustion engine 10 which adopts a control device according to the present invention. The internal combustion engine 10 includes a body (hereinafter, referred to as an "engine body") 20 of the internal combustion engine, a fuel injection valve 21 which is disposed so as to correspond to each of four combustion chambers of the engine body, and a fuel pump 22 which supplies fuel to the fuel injection valve 21 through a fuel supply pipe 23. Further, the internal combustion engine 10 includes an intake system 30 which supplies air from outside to the combustion chamber and an exhaust system 40 which discharges an exhaust gas discharged from the combustion chamber to outside. Further, the internal combustion engine 10 is a compression self-ignition type internal combustion engine (so-called diesel engine).

The intake system 30 includes an intake branch pipe 31 and an intake pipe 32. Furthermore, in the description below, the intake system 30 is referred to as an "intake passageway". One end (specifically, a branch portion) of the intake branch pipe 31 is connected to an intake port (not illustrated) which is formed inside the engine body 20 so as to correspond to each combustion chamber. Meanwhile, the other end of the intake branch pipe 31 is connected to the intake pipe 32. The intake pipe 32 has a throttle valve 33 which is disposed therein so as to control the amount of air flowing inside the intake pipe. Further, the intake pipe 32 has an intercooler 34 which is disposed therein so as to cool air flowing inside the intake pipe. Further, an air cleaner 36 is disposed at the end of the intake pipe 32 which faces outside.

Furthermore, the throttle valve 33 may control the amount of the gas which is suctioned into the combustion chamber in a changeable manner by controlling the operation state (specifically, this is an opening degree and, hereinafter, is referred to as a "throttle valve opening degree").

Meanwhile, the exhaust system 40 includes an exhaust branch pipe 41 and an exhaust pipe 42. Furthermore, in the description below, the exhaust system 40 is referred to as an "exhaust passageway". One end (specifically, the branch portion) of the exhaust branch pipe 41 is connected to an exhaust port (not illustrated) which is formed inside the engine body 20 so as to correspond to each combustion chamber. Meanwhile, the other end of the exhaust branch pipe 41 is connected to the exhaust pipe 42. The exhaust pipe 42 has a catalyst converter 43 disposed therein which is equipped with an exhaust purifying catalyst 43A for purifying a specific component in the exhaust gas.

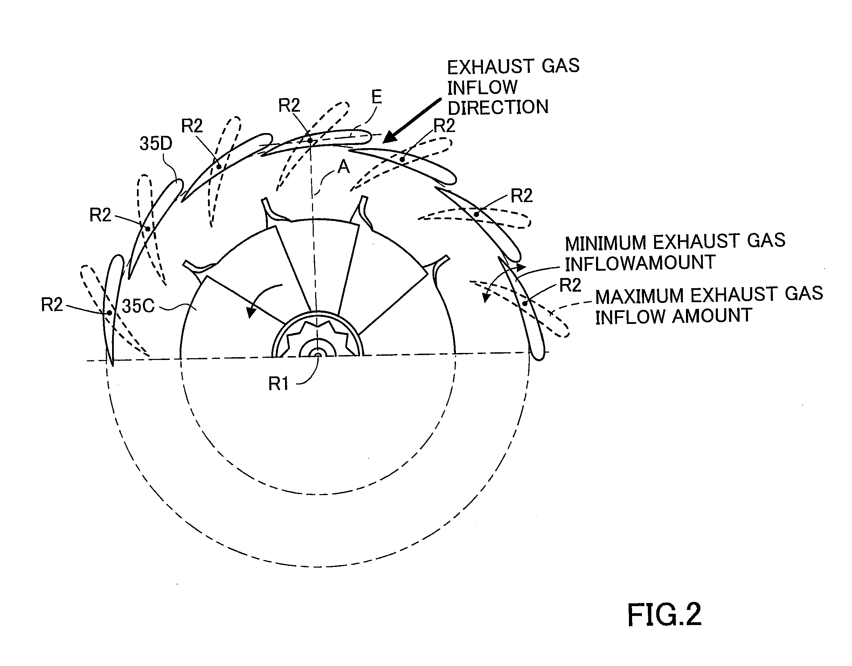

Further, the internal combustion engine 10 includes a supercharger 35. The supercharger 35 includes a compressor 35A which is disposed inside the intake pipe 32 at the upstream side of the intercooler 34 and an exhaust turbine 35B which is disposed inside the exhaust pipe 42 at the upstream side of the catalyst converter 43. As illustrated in FIG. 2, the exhaust turbine 35B includes an exhaust turbine body 35C and a plurality of wing-like vanes 35D.

The exhaust turbine 35B (precisely, the exhaust turbine body 35C) is connected to the compressor 35A through a shaft (not illustrated). When the exhaust turbine body 35C is rotated by the exhaust gas, the rotation is transmitted to the compressor 35A through the shaft, so that the compressor 35A is rotated. The gas inside the intake pipe 32 at the downstream side of the compressor is compressed by the rotation of the compressor 35A, so that the pressure of the gas (hereinafter, this pressure is referred to as a "supercharging pressure") is increased.

Meanwhile, the vanes 35D are arranged at the same interval in a radial shape about a rotation center axis R1 of the exhaust turbine body so as to surround the exhaust turbine body 35C. Further, each vane 35D is disposed so as to be rotatable about each corresponding axis indicated by the reference numeral R2 of FIG. 2. Further, when a direction in which each vane 35D extends (specifically, a direction indicated by the reference numeral E of FIG. 2) is referred to as "extension direction" and a line (specifically, a line indicated by the reference numeral of FIG. 2) connecting the rotation center axis R1 of the exhaust turbine body 35C to the rotation axis R2 of the vane 35D is referred to as "reference line", each vane 35D may rotate so that the angle formed between the extension direction E and the reference line A corresponding thereto is the same for all vanes 35D. Further, when each vane 35D is rotated so that an angle formed between the extension direction E and the reference line A corresponding thereto decreases, that is, the passageway area between the adjacent vanes 35D decreases, the pressure (hereinafter, this pressure is referred to as "exhaust pressure") inside the exhaust passageway 40 at the upstream side of the exhaust turbine body 35C increases, and as a result, the flow rate of the exhaust gas supplied to the exhaust turbine body 35C increases. For this reason, the rotation speed of the exhaust turbine body 35C increases, and thus the rotation speed of the compressor 35A increases. Accordingly, a gas which flows inside the intake pipe 32 is significantly compressed by the compressor 35A. For this reason, a compression degree of the gas which flows inside the intake pipe 32 by the compressor 35A becomes larger (specifically, the supercharging pressure becomes higher) as an angle (hereinafter, this angle is referred to as "vane opening degree") which is formed between the extension direction E of each vane 35D and the reference line corresponding thereto becomes smaller.

Accordingly, the supercharger 35 may control the supercharging pressure in a changeable manner by controlling the operation state (specifically, the vane opening degree) of the vane 35D.

Further, the internal combustion engine 10 includes an exhaust recirculation device (hereinafter, this is referred to as "EGR device") 50. The EGR device 50 includes an exhaust recirculation pipe (hereinafter, this is referred to as "EGR passageway") 51. One end of the EGR passageway 51 is connected to the exhaust branch pipe 41. Specifically, one end of the EGR passageway 51 is connected to a portion of the exhaust passageway 40 at the upstream side of the exhaust turbine 35B. Meanwhile, the other end of the EGR passageway 51 is connected to the intake branch pipe 31. Specifically, the other end of the EGR passageway 51 is connected to a portion of the intake passageway at the downstream side of the compressor 35A. Further, the EGR passageway 51 is equipped with an exhaust recirculation control valve (hereinafter, this exhaust recirculation control valve is referred to as "EGR control valve") 52 which controls the flow rate of the exhaust gas flowing inside the EGR passageway. In the internal combustion engine 10, the flow rate of the exhaust gas flowing inside the EGR passageway 51 becomes larger as the opening degree (hereinafter, this opening degree is referred to as "EGR control valve opening degree") of the EGR control valve 52 becomes larger. Further, the EGR passageway 51 is equipped with an exhaust recirculation cooler 53 which cools the exhaust gas flowing inside the EGR passageway.

Furthermore, the EGR device 50 may control the amount of the exhaust gas (hereinafter, this exhaust gas is referred to as "EGR gas") introduced into the intake passageway 30 through the EGR passageway 51 in a changeable manner by controlling the operation state (specifically, this is the opening degree of the EGR control valve 52 and hereinafter, this opening degree is referred to as "EGR control valve opening degree") of the EGR control valve 52.

Further, an air flow meter 71 which detects the flow rate of air flowing inside the intake pipe is attached to the intake pipe 32 which is disposed at the downstream side of the air cleaner 36 and is disposed at the upstream side of the compressor 35A. Further, a pressure sensor (hereinafter, referred to as "supercharging pressure sensor") 72 which detects the pressure (specifically, the supercharging pressure) of the gas in the intake branch pipe is attached to the intake branch pipe 31. Further, a crank position sensor 74 which detects the rotation phase of the crank shaft is attached to the engine body 20.

Further, the internal combustion engine 10 includes an electronic control device 60. The electronic control device 60 includes a microprocessor (CPU) 61, a read only memory (ROM) 62, a random access memory (RAM) 63, a backup RAM (Back up RAM) 64, and an interface 65. The interface 65 is connected to the fuel injection valve 21, the fuel pump 22, the throttle valve 33, the vane 35D, and the EGR control valve 52, and a control signal for controlling the operation thereof is applied thereto from the electronic control device 60 through the interface 65. Further, the interface 65 is also connected with the air flow meter 71, the supercharging pressure sensor 72, the crank position sensor 74, and an accelerator pedal opening degree sensor 75 which detects the opening degree of the accelerator pedal AP (specifically, the stepping amount of the accelerator pedal AP and hereinafter, this is referred to as "accelerator pedal opening degree"), and a signal corresponding to the flow rate detected by the air flow meter 71, a signal corresponding to the pressure detected by the supercharging pressure sensor 72, a signal corresponding to the rotation phase of the crank shaft detected by the crank position sensor 74, and a signal corresponding to the stepping amount of the accelerator pedal AP detected by the accelerator pedal opening degree sensor 75 are input to the interface 65.

Furthermore, the supercharging pressure is calculated by the electronic control device 60 based on the signal corresponding to the pressure detected by the supercharging pressure sensor 72, the engine rotation speed (specifically, the rotation speed of the internal combustion engine 10) is calculated by the electronic control device 60 based on the signal corresponding to the rotation phase of the crank shaft detected by the crank position sensor 74, and the accelerator pedal opening degree is calculated by the electronic control device 60 based on the signal corresponding to the stepping amount of the accelerator pedal AP detected by the accelerator pedal opening degree sensor 75.

When a ratio of the EGR gas in the gas with respect to the amount of the gas suctioned into the combustion chamber is referred to as an "EGR ratio", in this embodiment, an actual ratio of EGR (hereinafter, the EGR ratio is referred to as "actual EGR ratio") is controlled at a target value (hereinafter, the target value is referred to as "target EGR ratio") of the EGR ratio set as described below. Further, in this embodiment, an actual pressure of supercharging (hereinafter, the supercharging pressure is referred to as "actual supercharging pressure") is controlled at a target value (hereinafter, the target value is referred to as "target supercharging pressure") of the supercharging pressure set as described below.

Next, setting of the target EGR ratio and the target supercharging pressure according to this embodiment will be described. Furthermore, in the description below, an "engine operation state" is an "operation state of the internal combustion engine 10, an "engine load" is a "load of the internal combustion engine 10", an "engine rotation speed" is a "rotation speed of the internal combustion engine 10", and a "state during the engine operation" is a "state during the operation of internal combustion engine 10".

As described above, the EGR device 50 may control the amount of the EGR gas in a changeable manner by controlling the EGR control valve opening degree. Specifically, the EGR device 50 may control the actual EGR ratio in a changeable manner by controlling the EGR control valve opening degree. When the EGR gas amount is increased by the EGR device 50, the amount of the exhaust gas which passes through the exhaust turbine 35B of the supercharger 35 decreases by the increased amount. In other words, when the EGR gas amount is increased by the EGR device 50, the exhaust pressure decreases by the increased amount. For this reason, the compression effect of the supercharger 35 with respect to the gas flowing inside the intake pipe 32 decreases, so that the supercharging pressure decreases. Meanwhile, when the EGR gas amount is decreased by the EGR device 50, the amount of the exhaust gas which passes through the exhaust turbine 35B increases by the decreased amount. In other words, when the EGR gas amount is decreased by the EGR device 50, the exhaust pressure increases by the decreased amount. For this reason, the compression effect of the supercharger 35 with respect to the gas flowing inside the intake pipe 32 increases, so that the supercharging pressure increases. Specifically, the control of the EGR gas amount using the EGR device 50 (as a result, the control of the EGR ratio using the EGR device 50) influences the supercharging pressure.

Accordingly, in order to control the supercharging pressure at a desired value when the supercharging pressure is controlled by the supercharger 35, there is a need to take account of not only the influence of the control of the supercharging pressure by the supercharger 35 with respect to the supercharging pressure, but also the influence of the control of the EGR ratio by the EGR device 50 with respect to the supercharging pressure.

Further, as described above, the supercharger 35 may control the supercharging pressure in a changeable manner by controlling the vane opening degree. Here, when the exhaust pressure is increased so as to increase the supercharging pressure by the supercharger 35, the differential pressure between the supercharging pressure and the exhaust pressure increases, so that the EGR gas amount increases. Meanwhile, when the exhaust pressure is decreased so as to decrease the supercharging pressure by the supercharger 35, the differential pressure between the supercharging pressure and the exhaust pressure decreases, so that the EGR gas amount decreases. Specifically, the control of the supercharging pressure by the supercharger 35 influences the EGR gas amount (as a result, the EGR ratio).

Accordingly, in order to control the EGR ratio at a desired value when the EGR ratio is controlled by the EGR device 50, there is a need to take account of not only the influence of the control of the EGR ratio by the EGR device 50 with respect to the EGR ratio, but also the influence of the control of the supercharging pressure by the supercharger 35 with respect to the EGR ratio.

In addition, it can be seemed that the EGR ratio and the supercharging pressure interact with each other due to the aforementioned reason.

Further, the throttle valve 33 may control the amount of the gas (hereinafter, the gas is referred to as "intake gas") suctioned to the combustion chamber by the control of the opening degree in a changeable manner. The throttle valve opening degree is increased in order to increase the intake gas amount by the control of the throttle valve opening degree. Here, when the throttle valve opening degree is increased, the gas may easily pass through the throttle valve 33 by the increased amount, so that the supercharging pressure increases. Further, when the supercharging pressure increases, the differential pressure between the supercharging pressure and the exhaust pressure decreases by the increased amount, so that the EGR gas amount decreases. Specifically, when the throttle valve opening degree is increased, the supercharging pressure increases and the EGR gas amount decreases. Meanwhile, the throttle valve opening degree is decreased so as to decrease the intake gas amount by the control of the throttle valve opening degree. Here, when the throttle valve opening degree is decreased, the gas may not easily pass through the throttle valve 33 by the decreased amount, so that the supercharging pressure decreases. Further, when the supercharging pressure decreases, the differential pressure between the supercharging pressure and the exhaust pressure increases by the decreased amount, so that the EGR gas amount increases. Specifically, when the throttle valve opening degree is decreased, the supercharging pressure decreases and the EGR gas amount increases. Specifically, the control of the intake gas amount by the throttle valve 33 influences the EGR gas amount (as a result, the EGR ratio) and the supercharging pressure.

Accordingly, in order to control the EGR ratio at a desired value when the EGR ratio is controlled by the EGR device 50, there is a need to take account of not only the influence of the control of the EGR ratio by the EGR device 50 with respect to the EGR ratio, but also the influence of the control of the intake gas amount by the throttle valve 33 with respect to the EGR ratio. Then, in order to control the supercharging pressure at a desired value when the supercharging pressure is controlled by the supercharger 35, there is a need to take account of not only the influence of the control of the supercharging pressure by the supercharger 35 with respect to the supercharging pressure, but also the influence of the control of the intake gas amount by the throttle valve 33 with respect to the supercharging pressure.

In addition, it can be seemed that the EGR ratio, the supercharging pressure, and the intake gas amount interact with each other due to the aforementioned reason.

To summarize the aforementioned description, in order to control the EGR ratio at a desired value when the EGR ratio is controlled by the EGR device 50, there is a need to take account of not only the influence of the control of the EGR ratio by the EGR device 50 with respect to the EGR ratio, but also the influence of the control of the supercharging pressure by the supercharger 35 with respect to the EGR ratio and the influence of the control of the intake gas amount by the throttle valve 33 with respect to the EGR ratio. Further, in order to control the supercharging pressure at a desired value when the supercharging pressure is controlled by the supercharger 35, there is a need to take account of not only the influence of the control of the supercharging pressure by the supercharger 35 with respect to the supercharging pressure, but also the influence of the control of the EGR ratio by the EGR control device 50 with respect to the supercharging pressure and the influence of the control of the intake gas amount by the throttle valve 33 with respect to the supercharging pressure.

Therefore, in this embodiment, the target EGR ratio is calculated based on the influence of the control of the EGR ratio by the EGR device 50 with respect to the EGR ratio, the influence of the control of the supercharging pressure by the supercharger 35 with respect to the EGR ratio, and the influence of the control of the intake gas amount by the throttle valve 33 with respect to the EGR ratio, and the EGR control valve opening degree is controlled so that the actual EGR ratio is controlled at the target EGR ratio according to the target EGR ratio calculated in this way, thereby controlling the EGR ratio taking account of the influence of the control of the EGR ratio by the EGR device 50 with respect to the EGR ratio, the influence of the control of the supercharging pressure by the supercharger 35 with respect to the EGR ratio, and the influence of the control of the intake gas amount by the throttle valve 33 with respect to the EGR ratio.

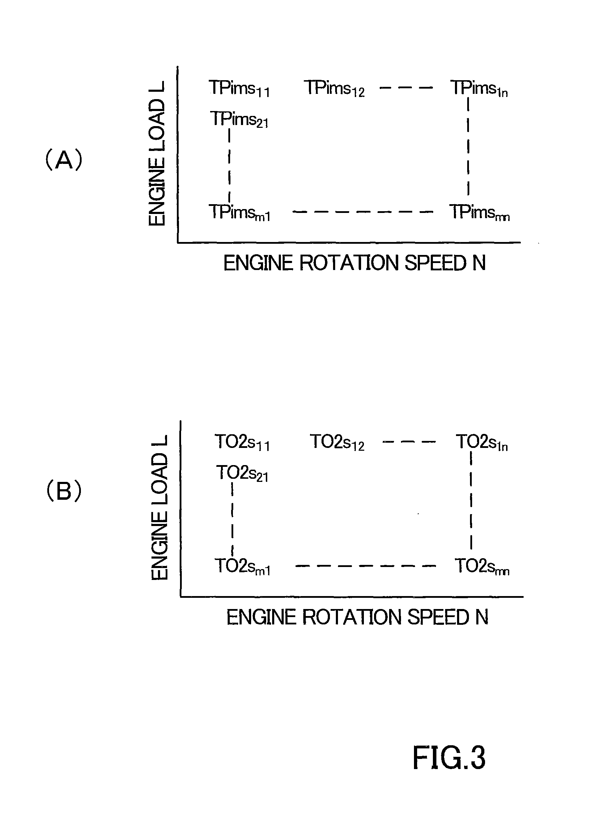

More specifically, when the constant operation state is set as an engine operation state where the engine rotation speed change amount per unit time is approximately zero and the engine load change amount is approximately zero per unit time, the supercharging pressure which is set as a target when the engine operation state is in the constant operation state is obtained in advance through an experiment or the like and the supercharging pressure is stored as a target constant supercharging pressure TPims in the electronic control device 60 in the form of the map of the function between the engine rotation speed N and the engine load L as illustrated in FIG. 3(A). Further, the target constant supercharging pressure TPims is acquired from the aforementioned map (hereinafter, the map is referred to as "target constant supercharging pressure map") based on the engine rotation speed N and the engine load L during the engine operation.

Further, the oxygen concentration in the intake gas which is set as a target when the engine operation state is in the constant operation state is obtained in advance through an experiment or the like, and the oxygen concentration is stored as a target constant oxygen concentration TO2s in the electronic control device 60 in the form of the map of the function between the engine rotation speed N and the engine load L as illustrated in FIG. 3(B). Further, the target constant oxygen concentration TO2s is acquired from the aforementioned map (hereinafter, the map is referred to as "target constant oxygen concentration map") based on the engine rotation speed N and the engine load L during the engine operation.

Further, the target constant EGR ratio is calculated from the EGR ratio in which the actual oxygen concentration (hereinafter, the oxygen concentration is referred to as "actual oxygen concentration") in the intake gas is set as the target constant oxygen concentration TO2s when the actual supercharging pressure is controlled at the target constant supercharging pressure TPims. In other words, the target constant EGR ratio is calculated based on the target constant supercharging pressure TPims and the target constant oxygen concentration TO2s.

Meanwhile, as an index representing the possibility that the actual EGR ratio may not be controlled at the target constant EGR ratio in a desired manner when the current actual EGR ratio is controlled at the target constant EGR ratio calculated as described above, a EGR ratio control difficulty level is calculated based on the influence of the control of the EGR ratio by the EGR device 50 with respect to the EGR ratio, the influence of the control of the supercharging pressure by the supercharger 35 with respect to the EGR ratio, and the influence of the control of the intake gas amount by the throttle valve 33 with respect to the EGR ratio.

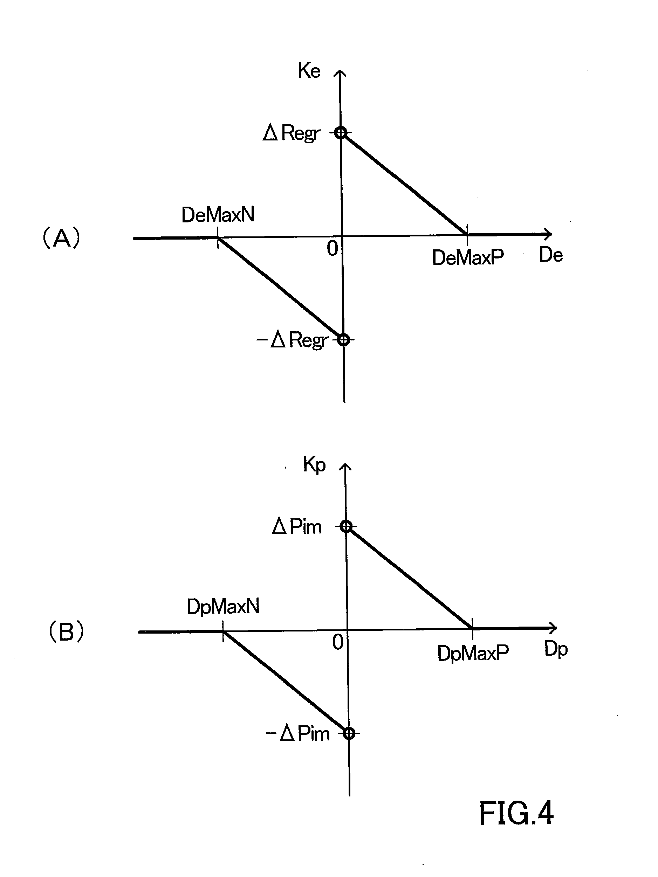

Meanwhile, a value to be added to the current actual EGR ratio so as to calculate the EGR ratio, which may be reached from the current EGR ratio with a predetermined followability (in other words, within a predetermined time) taking account of the EGR ratio control difficulty level and the current EGR ratio, is obtained in advance through an experiment or the like, and the value is stored as an EGR ratio addition coefficient Ke in the electronic control device 60 in the form of the map of the function of an EGR ratio control difficulty level De as illustrated in FIG. 4(A). Further, the EGR ratio addition coefficient Ke is acquired from the aforementioned map (hereinafter, the map is referred to as "EGR ratio addition coefficient map") based on the EGR ratio control difficulty level De calculated as described above. Further, a value in which the EGR ratio addition coefficient Ke acquired in this way is added to the current actual EGR ratio is set as the target EGR ratio.

In this embodiment, the EGR control valve opening degree is controlled so that the actual EGR ratio is controlled at the target EGR ratio set in this way. Accordingly, since the target value of the EGR ratio at which the actual EGR ratio is controlled in a desired manner is set as the final target EGR ratio, the actual EGR ratio is controlled at the target EGR ratio in a desired manner.

In addition, in the EGR ratio addition coefficient map of this embodiment, when the EGR control difficulty level De is a positive value, the EGR ratio addition coefficient Ke takes a positive value and the absolute value of the EGR ratio addition coefficient Ke becomes smaller as the absolute value of the EGR control difficulty level De becomes higher.

Further, when the EGR control difficulty level De is a positive value and the absolute value is higher than a predetermined positive maximum value DeMaxP, the EGR ratio addition coefficient Ke becomes zero. Further, when the EGR control difficulty level De is a negative value, the EGR ratio addition coefficient Ke takes a negative value and the absolute value of the EGR ratio addition coefficient Ke becomes smaller as the absolute value of the EGR control difficulty level De becomes higher. Further, when the EGR control difficulty level De is a negative value and the absolute value is larger than a predetermined negative maximum value DeMaxN, the EGR ratio addition coefficient Ke becomes zero.

Further, in the EGR ratio addition coefficient map of this embodiment, in the case where the EGR control difficulty level De is zero when the deviation of the current actual EGR ratio with respect to the target constant EGR ratio acquired as described above takes a positive value, the EGR ratio addition coefficient Ke takes the value equal to the deviation of the positive value. Meanwhile, in the case where the EGR control difficulty level De is zero when the deviation of the current actual EGR ratio with respect to the target constant EGR ratio acquired as described above takes a negative value, the EGR ratio addition coefficient Ke takes the value equal to the deviation of the negative value.

Further, in this embodiment, the target supercharging pressure is calculated based on the influence of the control of the supercharging pressure by the supercharger 35 with respect to the supercharging pressure, the influence of the control of the EGR ratio by the EGR control device 50 with respect to the supercharging pressure, and the influence of the control of the intake gas amount by the throttle valve 33 with respect to the supercharging pressure, and the vane opening degree is controlled so that the actual supercharging pressure is controlled at the target supercharging pressure according to the target supercharging pressure calculated in this way, thereby controlling the supercharging pressure taking account of the influence of the control of the supercharging pressure by the supercharger 35 with respect to the supercharging pressure, the influence of the control of the EGR ratio by the EGR control device 50 with respect to the supercharging pressure, and the influence of the control of the intake gas amount by the throttle valve 33 with respect to the supercharging pressure.

More specifically, in this embodiment, the target constant supercharging pressure TPims is acquired from the target constant supercharging pressure map based on the engine rotation speed N and the engine load L during the engine operation.

Meanwhile, as an index representing the possibility that the actual supercharging pressure may not be controlled at the target constant supercharging pressure TPims in a desired manner when the current actual supercharging pressure is controlled at the target constant supercharging pressure TPims acquired as described above, the supercharging pressure control difficulty level is calculated based on the influence of the control of the supercharging pressure by the supercharger 35 with respect to the supercharging pressure, the influence of the control of the EGR ratio by the EGR control device 50 with respect to the supercharging pressure, and the influence of the control of the intake gas amount by the throttle valve 33 with respect to the supercharging pressure.

Meanwhile, a value to be added to the current actual supercharging pressure so as to calculate the supercharging pressure, which may be reached from the current supercharging pressure with a predetermined followability (in other words, within a predetermined time) taking account of the supercharging pressure control difficulty level and the current supercharging pressure, is obtained in advance by an experiment or the like, and the value is stored as a supercharging pressure addition coefficient Kp in the electronic control device 60 in the form of the map of the function of the supercharging pressure control difficulty level Dp as illustrated in FIG. 4(B). Further, the supercharging pressure addition coefficient Kp is acquired from the aforementioned map (hereinafter, the map is referred to as "supercharging pressure addition coefficient map") based on the supercharging pressure control difficulty level Dp calculated as described above. Further, a value in which the supercharging pressure addition coefficient Kp acquired in this way is added to the current actual supercharging pressure is set as the target supercharging pressure.

In this embodiment, the vane opening degree is controlled so that the actual supercharging pressure is controlled at the target supercharging pressure set in this way. Accordingly, since the target value of the supercharging pressure at which the actual supercharging pressure is controlled in a desired manner is set as a final target supercharging pressure, the actual supercharging pressure is controlled at the target supercharging pressure in a desired manner.

In addition, in the supercharging pressure addition coefficient map of this embodiment, when the supercharging pressure control difficulty level Dp is a positive value, the supercharging pressure addition coefficient Kp takes a positive value and the absolute value of the supercharging pressure addition coefficient Kp becomes smaller as the absolute value of the supercharging pressure control difficulty level Dp becomes higher. Further, when the supercharging pressure control difficulty level Dp is a positive value and the absolute value is larger than a predetermined positive maximum value DpMaxP, the supercharging pressure addition coefficient Kp becomes zero. Further, when the supercharging pressure control difficulty level Dp is a negative value, the supercharging pressure addition coefficient Kp takes a negative value and the absolute value of the supercharging pressure addition coefficient Kp becomes smaller as the absolute value of the supercharging pressure control difficulty level Dp becomes higher. Further, when the supercharging pressure control difficulty level Dp is a negative value and the absolute value is larger than a predetermined negative maximum value DpMaxN, the supercharging pressure addition coefficient Kp becomes zero.

Further, in the supercharging pressure addition coefficient map of this embodiment, in the case where the supercharging pressure control difficulty level Dp is zero when the deviation of the current actual supercharging pressure with respect to the target constant supercharging pressure acquired as described above takes a positive value, the supercharging pressure addition coefficient Kp takes the value equal to the deviation of the positive value. Meanwhile, in the case where the supercharging pressure control difficulty level Dp is zero when the deviation of the current actual supercharging pressure with respect to the target constant supercharging pressure acquired as described above takes a negative value, the supercharging pressure addition coefficient Kp takes the value equal to the deviation of the negative value.

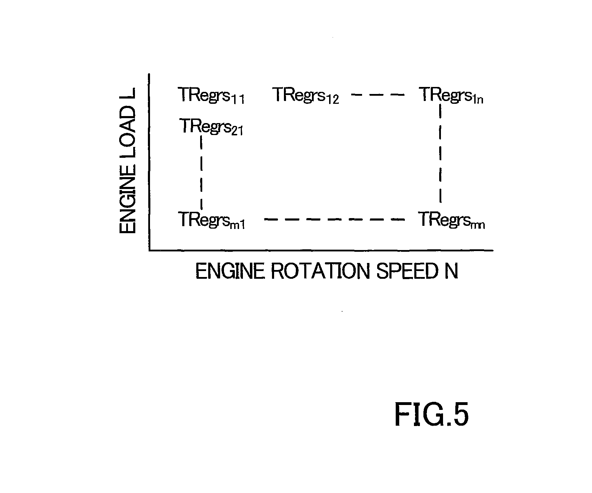

In addition, in the aforementioned embodiment, the EGR ratio in which the actual oxygen concentration may be set as the target constant oxygen concentration is calculated based on the target constant supercharging pressure and the target constant oxygen concentration, and the EGR ratio calculated in this way is set as the target constant EGR ratio. However, the EGR ratio which is set as a target when the engine operation state is in the constant operation state is obtained in advance by an experiment or the like, and the EGR ratio is stored as a target constant EGR ratio TRegrs in the electronic control device 60 in the form of the map of the function of the engine rotation speed N and the engine load L as illustrated in FIG. 5, thereby setting the target constant EGR ratio TRegrs which is acquired from the map based on the engine rotation speed N and the engine load L during the engine operation at the target constant EGR ratio.

Accordingly, the setting of the target EGR ratio according to the aforementioned embodiment may be expressed as below in a broad sense. Specifically, in the setting of the target EGR ratio according to the aforementioned embodiment, as an index representing the possibility that the actual EGR ratio may not be controlled at the temporarily set target EGR ratio in a desired manner when the target EGR ratio is temporarily set as a given value, the EGR ratio control difficulty level is calculated based on the influence of the control of the EGR ratio by the EGR device 50 with respect to the EGR ratio, the influence of the control of the supercharging pressure by the supercharger 35 with respect to the EGR ratio, and the influence of the control of the intake gas amount by the throttle valve 33 with respect to the EGR ratio, and the value obtained by correcting the temporarily set target EGR ratio using the EGR ratio control difficulty level calculated in this way is set as the final target EGR ratio.

Further, the setting of the target supercharging pressure according to the aforementioned embodiment may be expressed as below in a broad sense. Specifically, in the setting of the target supercharging pressure according to the aforementioned embodiment, as an index representing the possibility that the actual supercharging pressure may not be controlled at the temporarily set target supercharging pressure in a desired manner when the target supercharging pressure is temporarily set as a given value, the supercharging pressure control difficulty level is calculated based on the influence of the control of the supercharging pressure by the supercharger 35 with respect to the supercharging pressure, the influence of the control of the EGR ratio by the EGR control device 50 with respect to the supercharging pressure, and the influence of the control of the intake gas amount by the throttle valve 33 with respect to the supercharging pressure, and a value obtained by correcting the temporarily set target supercharging pressure using the supercharging pressure control difficulty level calculated in this way is set as the final target supercharging pressure.

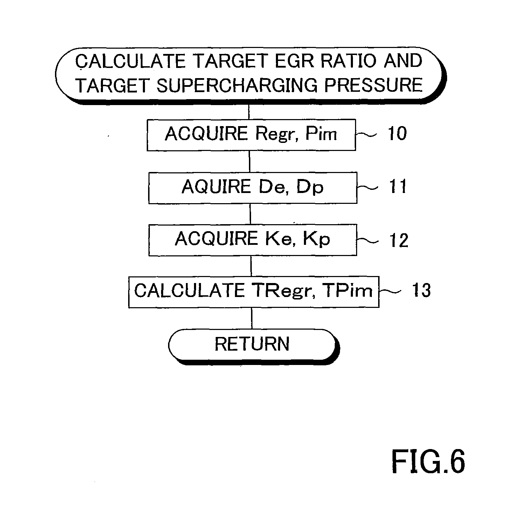

A routine which executes the setting of the target EGR ratio and the target supercharging pressure according to the aforementioned embodiment is illustrated in FIG. 6. When the routine of FIG. 6 is started, in step 10, a current actual EGR ratio Regr and a current actual supercharging pressure Pim are acquired. Subsequently, in step 11, the EGR ratio control difficulty level De and the supercharging pressure control difficulty level Dp are acquired. Subsequently, in step 12, the EGR ratio addition coefficient Ke is acquired from the EGR ratio addition coefficient map of FIG. 4(A) based on the EGR ratio control difficulty level De acquired in step 11, and the supercharging pressure addition coefficient Kp is acquired from the supercharging pressure addition coefficient map of FIG. 4(B) based on the supercharging pressure control difficulty level Dp acquired in step 11. Subsequently, in step 13, the target EGR ratio TRegr is calculated by adding the EGR ratio addition coefficient Ke acquired in step 12 to the current actual EGR ratio Regr acquired in step 10, and the target supercharging pressure TPim is calculated by adding the supercharging pressure addition coefficient Kp acquired in step 12 to the current actual supercharging pressure Pim acquired in step 10.

Next, the EGR ratio control difficulty level of this embodiment will be described. In addition, in the description below, the "target EGR control valve opening degree" is the "EGR control valve opening degree which is a target to be set by the electronic control device 60", the "EGR control valve opening degree instruction" is the "instruction which is given to the actuator operating the EGR control valve 52 from the electronic control device 60 and is generated for the operation amount (in other words, the EGR control valve opening degree) with respect to the actuator", the "operation speed of the EGR control valve" is the "speed (specifically, the response speed of the EGR control valve 52 with respect to the EGR control valve opening degree instruction) of the EGR control valve 52 when the EGR control valve opening degree instruction is given from the electronic control device 60 to the actuator operating the EGR control valve 52 and the actuator operates the EGR control valve 52", the "instructed EGR control valve opening degree" is the "EGR control valve opening degree corresponding to the EGR control valve opening degree instruction", and the "target EGR ratio followability" is the "performance for the time necessary until the actual EGR ratio reaches the target EGR ratio", when the target EGR ratio followability is high, the time necessary until the actual EGR ratio reaches the target EGR ratio is short and there is a high possibility that the actual EGR ratio may be controlled at the target EGR ratio in a desired manner. The "EGR ratio influence degree of the EGR control valve" is the "degree (specifically, the sensitivity in the change of the EGR control valve opening degree with respect to the EGR ratio) of the influence on the EGR ratio due to the change of the EGR control valve opening degree when the EGR control valve opening degree changes by a predetermined value".

Further, in the description below, the "target vane opening degree" is the "vane opening degree which is set as a target by the electronic control device 60", the "vane opening degree instruction" is the "instruction which is given to the actuator operating the vane 35D from the electronic control device 60 and is set for the operation amount (in other words, the vane opening degree) with respect to the actuator", the "operation speed of the vane" is the "speed (specifically, the response speed of the vane 35D with respect to the vane opening degree instruction) of the vane 35D when the vane opening degree instruction is given from the electronic control device 60 to the actuator operating the vane 35D and the actuator operates the vane 35D", and the "instructed vane opening degree" is the "vane opening degree corresponding to the vane opening degree instruction".

Further, in the description below, the "target throttle valve opening degree" is the "throttle valve opening degree which is set as a target by the electronic control device 60", the "throttle valve opening degree instruction" is the "instruction which is given to the actuator operating the throttle valve 33 from the electronic control device 60 and is generated for the operation amount (in other words, the throttle valve opening degree) with respect to the actuator", the "operation speed of the throttle valve" is the "speed (specifically, the response speed of the throttle valve 33 with respect to the throttle valve opening degree instruction) when the throttle valve opening degree instruction is given from the electronic control device 60 to the actuator operating the throttle valve 33 and the actuator operates the throttle valve 33", and the "instructed throttle valve opening degree" is the "throttle valve opening degree corresponding to the throttle valve opening degree instruction".

As described above, since the EGR ratio when the EGR control valve opening degree changes, the EGR control valve 52 may be recognized as the control subject capable of directly controlling the EGR ratio. Further, in order to control the EGR ratio at the target EGR ratio, there is a need to change the EGR control valve opening degree so that the EGR ratio reaches the target EGR ratio.

Here, if the operation speed of the EGR control valve 52 is slow, the EGR control valve 52 may not cause the opening degree to promptly reach the instructed EGR control valve opening degree in accordance with the EGR control valve opening degree instruction when the EGR control valve opening degree instruction is given to the EGR control valve 52. Specifically, the degree of difficulty (hereinafter, the degree is referred to as "EGR ratio control difficulty level") for causing the EGR ratio to reach the target EGR ratio is high. Meanwhile, if the operation speed of the EGR control valve 52 is fast, the EGR control valve 52 may cause the opening degree to promptly reach the instructed EGR control valve opening degree in accordance with the EGR control valve opening degree instruction when the EGR control valve opening degree instruction is given to the EGR control valve 52. Specifically, the EGR ratio control difficulty level is low.

In this way, the EGR ratio control difficulty level is determined in accordance with the operation speed of the EGR control valve 52. Accordingly, components to be taken into account to determine whether the EGR ratio may reach the target EGR ratio with a predetermined target EGR ratio followability include the operation speed of the EGR control valve 52, as an example.

Further, when the EGR ratio influence degree of the EGR control valve 52 is small, the opening degree of the EGR control valve 52 needs to be increased so as to change the EGR ratio by a predetermined value. Specifically, the EGR ratio control difficulty level is high. Meanwhile, when the EGR ratio influence degree of the EGR control valve 52 is large, the opening degree of the EGR control valve 52 may be decreased so as to change the EGR ratio by a predetermined value. Specifically, the EGR ratio control difficulty level is low.

In this way, the EGR ratio control difficulty level is determined so as to correspond to the EGR ratio influence degree of the EGR control valve 52. Accordingly, as one of components to be taken into account to determine whether the EGR ratio may reach the target EGR ratio with a predetermined target EGR ratio followability, the EGR ratio influence degree of the EGR control valve 52 may be exemplified.

Further, as described above, the supercharging pressure changes when the vane opening degree changes. However, the exhaust pressure decreases when the vane opening degree increases. As a result, since the differential pressure between the supercharging pressure and the exhaust pressure is small, the EGR gas amount decreases, so that the EGR ratio decreases. Meanwhile, the exhaust pressure increases when the vane opening degree decreases. As a result, since the differential pressure between the supercharging pressure and the exhaust pressure is large, the EGR gas amount increases, so that the EGR ratio increases. In this way, the EGR ratio changes when the vane opening degree changes.

Here, in the case where the vane opening degree increases and the EGR ratio decreases by the increased vane opening degree when increasing the EGR ratio to the target EGR ratio, it is difficult to cause the EGR ratio to reach the target EGR ratio since the EGR ratio per unit time along with an increase of the vane opening degree when the operation speed of the vane 35D is fast. Specifically, the EGR ratio control difficulty level is high. On the contrary, in this case, it is easy to cause the EGR ratio to reach the target EGR ratio since decrease amount of the EGR ratio per unit time along with an increase in the vane opening degree is small when the operation speed of the vane 35D is slow. Specifically, the EGR ratio control difficulty level is low. Of course, in the case where the vane opening degree decreases and the EGR ratio increases by the decreased vane opening degree when increasing the EGR ratio to the target EGR ratio, it is easy to cause the EGR ratio to reach the target EGR ratio since the EGR ratio per unit time along with a decrease of the vane opening degree largely increases when the operation speed of the vane 35D is fast. Specifically, the EGR ratio control difficulty level is low. On the contrary, in this case, it is difficult to cause the EGR ratio to reach the target EGR ratio since an increase amount of the EGR ratio per unit time along with a decrease in the vane opening degree is small when the operation speed of the vane 35D is slow. Specifically, the EGR ratio control difficulty level is high.

The aforementioned description also applies to a case where the vane opening degree decreases and the EGR ratio increases by the decreased vane opening degree when the EGR ratio is decreased to the target EGR ratio and a case where the vane opening degree increases and the EGR ratio decreases by the increased vane opening degree when the EGR ratio is decreased to the target EGR ratio.

Specifically, in the case where the vane opening degree decreases and the EGR ratio increases by the decreased vane opening degree when decreasing the EGR ratio to the target EGR ratio, the EGR ratio control difficulty level is high when the operation speed of the vane 35D is fast. On the contrary, the EGR ratio control difficulty level is low when the operation speed of the vane 35D is slow. Meanwhile, in the case where the vane opening degree increases and the EGR ratio decreases by the increased vane opening degree when decreasing the EGR ratio to the target EGR ratio, the EGR ratio control difficulty level is low when the operation speed of the vane 35D is fast. On the contrary, the EGR ratio control difficulty level is high when the operation speed of the vane 35D is slow.

In this way, the EGR ratio control difficulty level is determined so as to correspond to the operation speed of the vane 35D. Accordingly, as one of components to be taken into account to determine whether the EGR ratio may reach the target EGR ratio with a predetermined target EGR ratio followability, the operation speed of the vane 35D may be exemplified.

Further, when the vane opening degree increases, the EGR gas amount decreases by the increased vane opening degree and the EGR ratio decreases. At this time, in the case where the EGR ratio needs to be increased to the target EGR ratio, it becomes difficult to cause the EGR ratio to reach the target EGR ratio by the decreased EGR ratio along with an increase in the vane opening degree. Further, at this time, if the degree (specifically, this is the sensitivity in the change of the vane opening degree with respect to the EGR ratio, and the degree of the influence is hereinafter referred to as "EGR ratio influence degree of the vane") of the influence on the EGR ratio due to the change of the vane opening degree is large when the vane opening degree changes by a predetermined value, the EGR ratio control difficulty level largely increases. On the contrary, when the EGR ratio influence degree of the vane is small, an increase amount of the EGR ratio control difficulty level is small. Meanwhile, in the case where the EGR ratio needs to be decreased to the target EGR ratio, it is easy to cause the EGR ratio to reach the target EGR ratio by the decreased EGR ratio with an increase in the vane opening degree. Further, at this time, when the EGR ratio influence degree of the vane is large, the EGR ratio control difficulty level largely decreases. On the contrary, when the EGR ratio influence degree of the vane is small, a decrease amount of the EGR ratio control difficulty level is small.

Similarly, when the vane opening degree decreases, the EGR gas amount increases by the decreased vane opening degree and the EGR ratio increases. At this time, in the case where the EGR ratio needs to be decreased to the target EGR ratio, it is difficult to cause the EGR ratio to reach the target EGR ratio by the increased EGR ratio with a decrease in the vane opening degree. Further, at this time, when the EGR ratio influence degree of the vane is large, the EGR ratio control difficulty level significantly increases. On the contrary, when the EGR ratio influence degree of the vane is small, an increase amount of the EGR ratio control difficulty level is small. Meanwhile, in the case where the EGR ratio needs to be increased to the target EGR ratio, it is easy to cause the EGR ratio to reach the target EGR ratio by the increased EGR ratio along with a decrease in the vane opening degree. Further, at this time, when the EGR ratio influence degree of the vane is large, the EGR ratio control difficulty level significantly decreases. On the contrary, when the EGR ratio influence degree of the vane is small, decrease of the EGR ratio control difficulty level is small.

In this way, the EGR ratio control difficulty level changes so as to correspond to the EGR ratio influence degree of the vane 35D. Accordingly, components to be taken into account to determine whether the EGR ratio may reach the target EGR ratio with a predetermined target EGR ratio followability include the EGR ratio influence degree of the vane 35D, as an example.

Further, as described above, the intake gas amount changes when the throttle valve opening degree changes. However, since the amount (hereinafter, the amount of air is referred to as "throttle valve passage air amount") of air passing through the throttle valve 33 increases when the throttle valve opening degree increases, the EGR gas amount decreases by the increased throttle valve passage air amount. In other words, since the supercharging pressure increases when the throttle valve opening degree increases, the differential pressure between the supercharging pressure and the exhaust pressure decreases, so that the EGR gas amount decreases. Meanwhile, since the throttle valve passage air amount decreases when the throttle valve opening degree decreases, the EGR gas amount increases by the decreased throttle valve passage air amount. In other words, since the supercharging pressure decreases when the throttle valve opening degree decreases, the differential pressure between the supercharging pressure and the exhaust pressure increases, so that the EGR gas amount increases. In this way, when the throttle valve opening degree changes, the EGR gas amount changes, so that the EGR ratio changes.

Here, if the operation speed of the throttle valve 33 is fast, the throttle valve 33 may cause the opening degree to promptly reach the instructed throttle valve opening degree in accordance with the throttle valve opening degree instruction when the throttle valve opening degree instruction is given to the throttle valve 33. Meanwhile, if the operation speed of the throttle valve 33 is slow, the throttle valve 33 may not cause the opening degree to promptly reach the instructed throttle valve opening degree in accordance with the throttle opening degree instruction when the throttle valve opening degree instruction is given to the throttle valve 33.

In this way, the time necessary until the throttle valve opening degree reaches the instructed throttle valve opening degree is determined in accordance with the operation speed of the throttle valve 33. Further, as described above, when the throttle valve opening degree changes, the EGR gas amount changes, so that the EGR ratio changes. For this reason, components to be taken into account to determine whether the EGR ratio may reach the target EGR ratio with a predetermined target EGR ratio followability include the operation speed of the throttle valve 33, as an example.

Further, when the throttle valve opening degree increases, the EGR gas amount decreases by the increased throttle valve opening degree and the EGR ratio decreases. At this time, in the case where the EGR ratio needs to be increased to the target EGR ratio, it is difficult to cause the EGR ratio to reach the target EGR ratio by the decreased EGR ratio along with an increase in the throttle valve opening degree. Further, at this time, if the degree (specifically, this is the sensitivity in the change of the throttle valve opening degree with respect to the EGR ratio and the degree of the influence is hereinafter referred to as "EGR ratio influence degree of the throttle valve") of the influence on the EGR ratio due to the change of the throttle valve opening degree is large when the throttle valve opening degree changes by a predetermined value, the EGR ratio control difficulty level largely increases. On the contrary, when the EGR ratio influence degree of the throttle valve is small, an increase amount of the EGR ratio control difficulty level is small. Meanwhile, in the case where the EGR ratio needs to be decreased to the target EGR ratio, it is easy to cause the EGR ratio to reach the target EGR ratio by the decreased EGR ratio with an increase in the throttle valve opening degree. Further, at this time, when the EGR ratio influence degree of the throttle valve is large, the EGR ratio control difficulty level largely decreases. On the contrary, when the EGR ratio influence degree of the throttle valve is small, a decrease amount of the EGR ratio control difficulty level is small.

Similarly, when the throttle valve opening degree decreases, the EGR gas amount increases by the decreased throttle valve opening degree and the EGR ratio increases. At this time, in the case where the EGR ratio needs to be decreased to the target EGR ratio, it is difficult to cause the EGR ratio to reach the target EGR ratio by the increased EGR ratio with a decrease in the throttle valve opening degree. Further, at this time, when the EGR ratio influence degree of the throttle valve is large, the EGR ratio control difficulty level largely increases. On the contrary, when the EGR ratio influence degree of the throttle valve is small, an increase amount of the EGR ratio control difficulty level is small. Meanwhile, in the case where the EGR ratio needs to be increased to the target EGR ratio, it is easy to cause the EGR ratio to reach the target EGR ratio by the increased EGR ratio with a decrease in the throttle valve opening degree. Further, at this time, when the EGR ratio influence degree of the throttle valve is large, the EGR ratio control difficulty level largely decreases. On the contrary, when the EGR ratio influence degree of the throttle valve is small, a decrease amount of the EGR ratio control difficulty level is small.

In this way, the EGR ratio control difficulty level changes in accordance with the EGR ratio influence degree of the throttle valve 33. Accordingly, as one of components to be taken into account to determine whether the EGR ratio may reach the target EGR ratio with a predetermined target EGR ratio followability, the EGR ratio influence degree of the throttle valve 33 may be exemplified.

To sum up the aforementioned description, the components to be taken into account to determine whether the EGR ratio may reach the target EGR ratio with a predetermined target EGR ratio followability include the operation speed of the EGR control valve 52, the EGR ratio influence degree of the EGR control valve, the operation speed of the vane 35D, the EGR ratio influence degree of the vane, the operation speed of the throttle valve 33, and the EGR ratio influence degree of the throttle valve.

Further, in this embodiment, the EGR ratio control difficulty level is obtained by taking these components into account as described below.

Specifically, in this embodiment, the operation speed of the EGR control valve 52 (hereinafter, the operation speed is referred to as "increase operation speed of the EGR control valve") when the EGR control valve opening degree increases, the operation speed of the EGR control valve 52 (hereinafter, the operation speed is referred to as "decrease operation speed of the EGR control valve") when the EGR control valve opening degree decreases, the operation speed of the vane 35D (hereinafter, the operation speed is referred to as "increase operation speed of the vane") when the vane opening degree increases, the operation speed of the vane 35D (hereinafter, the operation speed is referred to as "decrease operation speed of the vane") when the vane opening degree decreases, the operation speed of the throttle valve 33 (hereinafter, the operation speed is referred to as "increase operation speed of the throttle valve") when the throttle valve opening degree increases, and the operation speed of the throttle valve 33 (hereinafter, the operation speed is referred to as "decrease operation speed of the throttle valve") when the throttle valve opening degree decreases are obtained in advance.

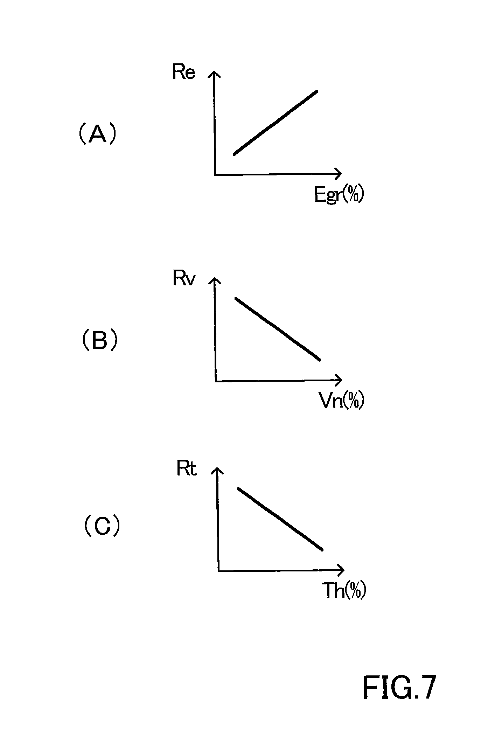

Further, in this embodiment, the EGR ratio influence degree of the EGR control valve 52, the EGR ratio influence degree of the vane 35D, and the EGR ratio influence degree of the throttle valve 33 are obtained in advance. Here, as illustrated in FIG. 7(A), when the horizontal axis indicates the ratio Egr of the EGR control valve opening degree with respect to the maximum value of the EGR control valve opening degree and the vertical axis indicates the EGR ratio change amount Re with a change in the ratio Egr of the EGR control valve opening degree, the EGR ratio influence degree of the EGR control valve 52 corresponds to the inclination (the inclination is a positive value) of the line representing a relation between the ratio Egr and the change amount Re. Further, as illustrated in FIG. 7(B), when the horizontal axis indicates the ratio Vn of the vane opening degree with respect to the maximum value of the vane opening degree and the vertical axis indicates the EGR ratio change amount Rv with a change in the ratio Vn of the vane opening degree, the EGR ratio influence degree of the vane 35D corresponds to the inclination (the inclination is a negative value) of the line representing the relation between the ratio Vn and the change amount Rv. Further, as illustrated in FIG. 7(C), when the horizontal axis indicates the ratio Th of the throttle valve opening degree with respect to the maximum value of the throttle opening degree and the vertical axis indicates the EGR ratio change amount Rt with a change in the ratio Th of the throttle valve opening degree, the EGR ratio influence degree of the throttle valve 33 corresponds to the inclination (the inclination is a negative value) of the line representing the relation between the ratio Th and the change amount Rt.

Further, in this embodiment, the deviation of the current actual EGR ratio with respect to the target constant EGR ratio is calculated as the EGR ratio deviation.

Further, it is determined whether the EGR ratio deviation ΔRegr is a positive value and is larger than a predetermined threshold value (hereinafter, the threshold value is referred to as "positive maximum EGR ratio deviation") ΔRegrMaxP (ΔRegr > ΔRegrMaxP). Here, when the inequation of ΔRegr > ΔRegrMaxP is established, the actual EGR ratio is considerably lower than the target constant EGR ratio, and hence the engine operation state becomes a state where the actual EGR ratio needs to be largely increased. Here, in order to increase the actual EGR ratio, the EGR control valve opening degree may be increased, the vane opening degree may be decreased, or the throttle valve opening degree may be decreased.

Therefore, when the inequation of ΔRegr > ΔRegrMaxP is established, the EGR ratio control difficulty level De is calculated according to the following equation 1 by using the EGR ratio deviation ΔRegr, the EGR ratio influence degree Ksee of the EGR control valve 52, the increase operation speed Krie of the EGR control valve 52, the EGR ratio influence degree Ksev of the vane 35D, the decrease operation speed Krdv of the vane 35D, the EGR ratio influence degree Kset of the throttle valve 33, and the decrease operation speed Krdt of the throttle valve 33.

$$\mathtt{De} = \Delta\mathtt{Regr}/(\mathtt{Ksee} \times \mathtt{Krie}) + \Delta\mathtt{Regr}/(-\mathtt{Ksev} \times \mathtt{Krdv}) + \Delta\mathtt{Regr}/(-\mathtt{Kset} \times \mathtt{Krdt})\ldots (1)$$

According to the aforementioned equation 1, in the situation where it is difficult to cause the actual EGR ratio to increase as the EGR ratio influence degree of the EGR control valve 52 becomes smaller, the larger EGR ratio control difficulty level De is calculated as the EGR ratio influence degree Ksee of the EGR control valve 52 becomes smaller. Further, according to the aforementioned equation 1, in the situation where it is difficult to cause the actual EGR ratio to increase as the increase operation speed of the EGR control valve 52 becomes slower, the larger EGR ratio control difficulty level De is calculated as the operation speed Krie of the EGR control valve 52 becomes slower. Further, according to the aforementioned equation 1, in the situation where it is difficult to cause the actual EGR ratio to increase as the EGR ratio influence degree of the vane 35D becomes smaller, since the EGR ratio influence degree Ksev of the vane 35D is a negative value, the larger EGR ratio control difficulty level De is calculated as the EGR ratio influence degree Ksev of the vane 35D becomes smaller. Further, according to the aforementioned equation 1, in the situation where it is difficult to cause the actual EGR ratio to increase as the decrease operation speed of the vane 35D becomes slower, the larger EGR ratio control difficulty level De is calculated as the operation speed Krdv of the vane 35D becomes slower. Further, according to the aforementioned equation 1, in the situation where it is difficult to cause the actual EGR ratio to increase as the EGR ratio influence degree of the throttle valve 33 becomes smaller, since the EGR ratio influence degree Kset of the throttle valve 33 is a negative value, the larger EGR ratio control difficulty level De is calculated as the EGR ratio influence degree Kset of the throttle valve 33 becomes smaller. Further, according to the aforementioned equation 1, in the situation where it is difficult to cause the actual EGR ratio to increase as the decrease operation speed of the throttle valve 33 becomes slower, the larger EGR ratio control difficulty level De is calculated as the decrease operation speed Krdt of the throttle valve 33 becomes slower.

Specifically, the EGR ratio control difficulty level De which is calculated according to the aforementioned equation 1 accurately reflects the difficulty level in the case where the actual EGR ratio reaches the target EGR ratio with a predetermined target EGR ratio followability in accordance with the EGR ratio influence degree Ksee of the EGR control valve 52, the operation speed Krie of the EGR control valve 52, the EGR ratio influence degree Ksev of the vane 35D, the operation speed Krdv of the vane 35, the EGR ratio influence degree Kset of the throttle valve 33, and the operation speed Krdt of the throttle valve 33.

Meanwhile, when the inequation of ΔRegr > ΔRegrMaxP is not established, it is determined whether the EGR ratio deviation ΔRegr is a negative value and is smaller than a predetermined threshold value (hereinafter, the threshold value is referred to as "negative maximum EGR ratio deviation") ΔRegrMaxN (ΔRegr < ΔRegrMaxN). Specifically, it is determined whether the absolute value of the EGR ratio deviation ΔRegr is larger than the absolute value of the negative maximum EGR ratio deviation ΔRegrMaxN. Here, since the actual EGR ratio is considerably larger than the target constant EGR ratio when the inequation of ΔRegr < ΔRegrMaxN is established, the engine operation state becomes a state where the actual EGR ratio needs to be largely decreased. Here, in order to decrease the actual EGR ratio, the EGR control valve opening degree may be decreased, the vane opening degree may be increased, or the throttle valve opening degree may be increased.

Therefore, when the inequation of ΔRegr < ΔRegrMaxN is established, the EGR ratio control difficulty level De is calculated according to the following equation 2 by using the EGR ratio deviation ΔRegr, the EGR ratio influence degree Ksee of the EGR control valve 52, the decrease operation speed Krde of the EGR control valve 52, the EGR ratio influence degree Ksev of the vane 35D, the increase operation speed Kriv of the vane 35D, the EGR ratio influence degree Kset of the throttle valve 33, and the increase operation speed Krit of the throttle valve 33.

$$De = \Delta Regr/(Ksee \times Krde) + \Delta Regr/(-Ksev \times Kriv) + \Delta Regr/(-Kset \times Krit) \dots (2)$$

According to the aforementioned equation 2, in the situation where it is difficult to cause the actual EGR ratio to decrease as the EGR ratio influence degree of the EGR control valve 52 becomes smaller, the larger EGR ratio control difficulty level De is calculated as the EGR ratio influence degree Ksee of the EGR control valve 52 becomes smaller. Further, according to the aforementioned equation 2, in the situation where it is difficult to cause the actual EGR ratio to decrease as the decrease operation speed of the EGR control valve 52 becomes slower, the larger EGR ratio control difficulty level De is calculated as the decrease operation speed Krde of the EGR control valve 52 becomes slower. Further, according to the aforementioned equation 2, in the situation where it is difficult to cause the actual EGR ratio to decrease as the EGR ratio influence degree of the vane 35D becomes smaller, since the EGR ratio influence degree Ksev of the vane 35D is a negative value, the larger EGR ratio control difficulty level De is calculated as the EGR ratio influence degree Ksev of the vane 35D becomes smaller. Further, according to the aforementioned equation 2, in the situation where it is difficult to cause the actual EGR ratio to decrease as the decrease operation speed of the vane 35D becomes slower, the larger EGR ratio control difficulty level De is calculated as the decrease operation speed Krdv of the vane 35D becomes slower. Further, according to the aforementioned equation 2, in the situation where it is difficult to cause the actual EGR ratio to decrease as the EGR ratio influence degree of the throttle valve 33 becomes smaller, since the EGR ratio influence degree Kset of the throttle valve 33 is a negative value, the larger EGR ratio control difficulty level De is calculated as the EGR ratio influence degree Kset of the throttle valve 33 becomes smaller. Further, according to the aforementioned equation 2, in the situation where it is difficult to cause the actual EGR ratio to decrease as the increase operation speed of the throttle valve 33 becomes slower, the larger EGR ratio control difficulty level De is calculated as the increase operation speed Krit of the throttle valve 33 becomes slower.

Specifically, the EGR ratio control difficulty level De which is calculated according to the aforementioned equation 2 accurately reflects the difficulty level in the case where the actual EGR ratio reaches the target EGR ratio with a predetermined target EGR ratio followability in accordance with the EGR ratio influence degree Ksee of the EGR control valve 52, the operation speed Krde of the EGR control valve 52, the EGR ratio influence degree Ksev of the vane 35D, the operation speed Kriv of the vane 35, the EGR ratio influence degree Kset of the throttle valve 33, and the operation speed Krit of the throttle valve 33.

In addition, when the inequation of ΔRegr > ΔRegrMaxP is not established and the inequation of ΔRegr < ΔRegrMaxN is not established, the engine operation state is in a state where it is sufficient for the actual EGR ratio to be increased in a relatively small amount or the engine operation state is in a state where it is sufficient for the actual EGR ratio to be decreased in a relatively small amount. In this case, since the actual EGR ratio change amount is relatively small, the EGR ratio control difficulty level De is set as zero.

Further, in this embodiment, the EGR ratio addition coefficient Ke is acquired from the EGR ratio addition coefficient map illustrated in FIG. 4(A) based on the EGR ratio control difficulty level De calculated as described above, and a value in which the EGR ratio addition coefficient Ke acquired in this way is added to the current actual EGR ratio is set as the target EGR ratio.

Next, the supercharging pressure control difficulty level of this embodiment will be described. In addition, in the description below, the "target supercharging pressure followability" is the "performance related to the time necessary until the actual supercharging pressure reaches the target supercharging pressure". When the target supercharging pressure followability is high, the time necessary until the actual supercharging pressure reaches the target supercharging pressure is short, and there is a high possibility that the actual supercharging pressure may be controlled at the target supercharging pressure in a desired manner. The "supercharging pressure influence degree of the vane" is the "degree (specifically, the sensitivity in the change of the vane opening degree with respect to the supercharging pressure) of the influence on the supercharging pressure due to the change of the vane opening degree when the vane opening degree changes by a predetermined value", and the "supercharging pressure influence degree of the throttle valve" is the "degree (specifically, the sensitivity in the change of the throttle valve opening degree with respect to the supercharging pressure) of the influence on the supercharging pressure due to the change of the throttle valve opening degree when the throttle valve opening degree changes by a predetermined value".

As described above, since the supercharging pressure changes when the vane opening degree changes, the vane 35D may be recognized as the control subject which may directly control the supercharging pressure. Further, in order to control the supercharging pressure at the target supercharging pressure, there is a need to change the vane opening degree so that the supercharging pressure reaches the target supercharging pressure.

Here, when the operation speed of the vane 35D is slow, the vane 35D may not cause the opening degree to promptly reach the instructed vane opening degree in accordance with the vane opening degree instruction when the vane opening degree instruction is given to the vane 35D. Specifically, the degree of difficulty (hereinafter, the degree is referred to as "supercharging pressure control difficulty level") for causing the supercharging pressure to reach the target supercharging pressure is high. Meanwhile, when the operation speed of the vane 35D is fast, the vane 35D may cause the opening degree to promptly reach the instructed vane opening degree in accordance with the vane opening degree instruction when the vane opening degree instruction is given to the vane 35D. Specifically, the supercharging pressure control difficulty level is low.

In this way, the supercharging pressure control difficulty level is determined in accordance with the operation speed of the vane 35D. Accordingly, as one of components to be taken into account to determine whether the supercharging pressure may reach the target supercharging pressure with a predetermined target supercharging pressure followability, the operation speed of the vane 35 may be exemplified.

Further, when the supercharging pressure influence degree of the vane 35D is small, the opening degree of the vane 35D needs to be largely changed so as to change the supercharging pressure by a predetermined value. Specifically, the supercharging pressure control difficulty level is high. Meanwhile, when the supercharging pressure influence degree of the vane 35D is large, it is sufficient for the opening degree of the vane 35D to be decreased so as to change the supercharging pressure by a predetermined value. Specifically, the supercharging pressure control difficulty level is low.

In this way, the supercharging pressure control difficulty level is determined in accordance with the supercharging pressure influence degree of the vane 35D. Accordingly, as one of components to be taken into account to determine whether the supercharging pressure may reach the target supercharging pressure with a predetermined target supercharging pressure followability, the supercharging pressure influence degree of the vane 35D may be exemplified.

Further, as described above, the EGR ratio changes when the EGR control valve opening degree changes. However, since the EGR gas amount increases when the EGR control valve opening degree increases, the exhaust pressure decreases by the increased EGR gas amount (specifically, the amount (hereinafter, the amount of the exhaust gas is referred to as "turbine passage exhaust gas amount") of the exhaust gas passing through the exhaust turbine 35B decreases), so that the supercharging pressure decreases. Meanwhile, since the EGR gas amount decreases when the EGR control valve opening degree decreases, the exhaust pressure increases by the decreased EGR gas amount (specifically, the turbine passage exhaust gas amount increases), so that the supercharging pressure increases. In this way, the supercharging pressure changes when the EGR control valve opening degree changes.

Here, in the case where the EGR control valve opening degree increases and the supercharging pressure decreases by the increased EGR control valve opening degree when the supercharging pressure is increased to the target supercharging pressure, since the supercharging pressure per unit time largely decreases with an increase in the EGR control valve opening degree when the operation speed of the EGR control valve 52 is fast, it is difficult to cause the supercharging pressure to reach the target supercharging pressure. Specifically, the supercharging pressure control difficulty level is high. On the contrary, in this case, since a decrease amount of the supercharging pressure per unit time along with an increase in the EGR control valve opening degree is small when the operation speed of the EGR control valve 52 is slow, it is easy to cause the supercharging pressure to reach the target supercharging pressure. Specifically, the supercharging pressure control difficulty level is low. Of course, in the case where the EGR control valve opening degree decreases and the supercharging pressure increases by the decreased EGR control valve opening degree when the supercharging pressure is increased to the target supercharging pressure, since the supercharging pressure per unit time largely increases with a decrease in the EGR control valve opening degree when the operation speed of the EGR control valve 52 is fast, it is easy to cause the supercharging pressure to reach the target supercharging pressure. Specifically, the supercharging pressure control difficulty level is low. On the contrary, in this case, since an increase amount of the supercharging pressure per unit time along with a decrease in the EGR control valve opening degree is small when the operation speed of the EGR control valve 52 is slow, it is difficult to cause the supercharging pressure to reach the target supercharging pressure. Specifically, the supercharging pressure control difficulty level is high.

The aforementioned description also applies to a case where the EGR control valve opening degree decreases and the supercharging pressure increases by the decreased EGR control valve opening degree when the supercharging pressure is decreased to the target supercharging pressure and a case where the EGR control valve opening degree increases and the supercharging pressure decreases by the increased EGR control valve opening degree when the supercharging pressure is decreased to the target supercharging pressure.

Specifically, in the case where the EGR control valve opening degree decreases and the supercharging pressure increases by the decreased EGR control valve opening degree when the supercharging pressure is decreased to the target supercharging pressure, when the operation speed of the EGR control valve 52 is fast, the supercharging pressure control difficulty level largely increases. On the contrary, when the operation speed of the EGR control valve 52 is slow, an increase amount of the supercharging pressure control difficulty level is small. Meanwhile, in the case where the EGR control valve opening degree increases and the supercharging pressure decreases by the increased EGR control valve when the supercharging pressure is decreased to the target supercharging pressure, when the operation speed of the EGR control valve 52 is fast, the supercharging pressure control difficulty level largely decreases. On the contrary, when the operation speed of the EGR control valve 52 is slow, a decrease amount of the supercharging pressure control difficulty level is small.

In this way, the supercharging pressure control difficulty level is determined in accordance with the operation speed of the EGR control valve 52. Accordingly, as one of components to be taken into account to determine whether the supercharging pressure may reach the target supercharging pressure with a predetermined target supercharging pressure followability, the operation speed of the EGR control valve 52 may be exemplified.

Further, when the EGR control valve opening degree increases, the exhaust pressure decreases by the increased EGR control valve opening degree and the supercharging pressure decreases. At this time, when the supercharging pressure needs to be increased to the target supercharging pressure, it is difficult to cause the supercharging pressure to reach the target supercharging pressure by the decreased supercharging pressure with an increase in the EGR control valve opening degree. Further, at this time, if the degree (specifically, this is the sensitivity in the change of the EGR control valve opening degree with respect to the supercharging pressure and the degree of the influence is hereinafter referred to as "supercharging pressure influence degree of the EGR control valve") of the influence on the supercharging pressure due to the change of the EGR control valve opening degree is large when the EGR control valve opening degree changes by a predetermined value, the supercharging pressure control difficulty level largely increases. On the contrary, when the supercharging pressure influence degree of the EGR control valve is small, an increase amount of the supercharging pressure control difficulty level is small. Meanwhile, in the case where the supercharging pressure needs to be decreased to the target supercharging pressure, it is easy to cause the supercharging pressure to reach the target supercharging pressure by the decreased supercharging pressure with an increase in the EGR control valve opening degree. Further, at this time, when the supercharging pressure influence degree of the EGR control valve is large, the EGR ratio control difficulty level largely decreases. On the contrary, when the supercharging pressure influence degree of the EGR control valve is small, a decrease amount of the supercharging pressure control difficulty level is small.

Similarly, when the EGR control valve opening degree decreases, the exhaust pressure increases by the decreased EGR control valve opening degree and the supercharging pressure increases. At this time, in the case where the supercharging pressure needs to be decreased to the target supercharging pressure, it is difficult to cause the supercharging pressure to reach the target supercharging pressure by the increased supercharging pressure with a decrease in the EGR control valve opening degree. Further, at this time, when the supercharging pressure influence degree of the EGR control valve is large, the supercharging pressure control difficulty level largely increases. On the contrary, when the supercharging pressure influence degree of the EGR control valve is small, an increase amount of the supercharging pressure control difficulty level is small. Meanwhile, when the supercharging pressure needs to be increased to the target supercharging pressure, it is easy to cause the supercharging pressure to reach the target supercharging pressure by the increased supercharging pressure with a decrease in the EGR control valve opening degree. Further, at this time, when the supercharging pressure influence degree of the EGR control valve is large, the supercharging pressure control difficulty level largely decreases. On the contrary, when the supercharging pressure influence degree of the EGR control valve is small, a decrease amount of the supercharging pressure control difficulty level is small.

In this way, the supercharging pressure control difficulty level changes in accordance with the supercharging pressure influence degree of the EGR control valve 52. Accordingly, components to be taken into account to determine whether the supercharging pressure may reach the target supercharging pressure with a predetermined target supercharging pressure followability include the supercharging pressure influence degree of the EGR control valve 52, as an example.

Further, as described above, the intake gas amount changes when the throttle valve opening degree changes. However, since the throttle valve passage air amount increases when the throttle valve opening degree increases, the supercharging pressure increases by the increased throttle valve passage air amount as a result. Meanwhile, since the throttle valve passage air amount decreases when the throttle valve opening degree decreases, the supercharging pressure decreases by the decreased throttle valve passage air amount as a result. In this way, when the throttle valve opening degree changes, the throttle valve passage air amount changes, so that the supercharging pressure changes.

Here, as described above, the time necessary until the throttle valve opening degree reaches the instructed throttle valve opening degree is determined in accordance with the operation speed of the throttle valve 33. Further, as described above, since the throttle valve passage air amount changes so as to change the supercharging pressure with a change in the throttle valve opening degree, as one of components to be taken into account to determine whether the supercharging pressure may reach the target supercharging pressure with a predetermined target supercharging pressure followability, the operation speed of the throttle valve 33 may be exemplified.

Further, when the throttle valve opening degree increases, the throttle valve passage air amount decreases by the increased throttle valve opening degree and the supercharging pressure decreases. At this time, in the case where the supercharging pressure needs to be increased to the target supercharging pressure, it is difficult to cause the supercharging pressure to reach the target supercharging pressure by the decreased supercharging pressure with an increase in the throttle valve opening degree. Further, at this time, if the degree (specifically, this is the sensitivity in the change of the throttle valve opening degree with respect to the supercharging pressure and the degree of the influence is hereinafter referred to as "supercharging pressure influence degree of the throttle valve") of the influence on the supercharging pressure due to the change of the throttle valve opening degree is large when the throttle valve opening degree changes by a predetermined value, the supercharging pressure control difficulty level largely increases. On the contrary, when the supercharging pressure influence degree of the throttle valve is small, an increase amount of the supercharging pressure control difficulty level is small. Meanwhile, when the supercharging pressure needs to be decreased to the target supercharging pressure, it is easy to cause the supercharging pressure to reach the target supercharging pressure by the decreased supercharging pressure with an increase in the throttle valve opening degree. Further, at this time, when the supercharging pressure influence degree of the throttle valve is large, the supercharging pressure control difficulty level largely decreases. On the contrary, when the supercharging pressure influence degree of the throttle valve is small, a decrease amount of the supercharging pressure control difficulty level is small.

In this way, the supercharging pressure control difficulty level changes in accordance with the supercharging pressure influence degree of the throttle valve 33. Accordingly, components to be taken into account to determine whether the supercharging pressure may reach the target supercharging pressure with a predetermined target supercharging pressure followability include the supercharging pressure influence degree of the throttle valve 33, as an example.

To sum up the aforementioned description, the components to be taken into account to determine whether the supercharging pressure may reach the target supercharging pressure with a predetermined target supercharging pressure followability include the operation speed of the vane 35D, the supercharging pressure influence degree of the vane, the operation speed of the EGR control valve 52, the supercharging pressure influence degree of the EGR control valve, the operation speed of the throttle valve 33, and the supercharging pressure influence degree of the throttle valve.

Further, in this embodiment, the supercharging pressure control difficulty level is obtained by taking these components into account as described below.

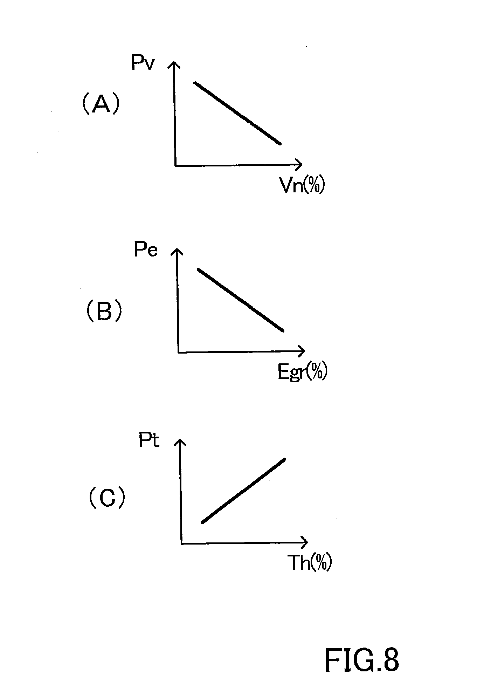

Specifically, in this embodiment, the supercharging pressure influence degree of the vane 35D, the supercharging pressure influence degree of the EGR control valve 52, and the supercharging pressure influence degree of the throttle valve 33 are obtained in advance. Here, as illustrated in FIG. 8(A), when the horizontal axis indicates the ratio Vn of the vane opening degree with respect to the maximum value of the vane opening degree and the vertical axis indicates the change amount Pv of the EGR ratio when the ratio Vn of the vane opening degree is changed, the EGR ratio influence degree of the vane 35D corresponds to the inclination (the inclination is a negative value) of the line representing the relation between the ratio Vn and the change amount Pv. Further, as illustrated in FIG. 8(B), when the horizontal axis indicates the ratio Egr of the EGR control valve opening degree with respect to the maximum value of the EGR control valve opening degree and the vertical axis indicates the change amount Pe of the EGR ratio when the ratio Egr of the EGR control valve opening degree is changed, the EGR ratio influence degree of the EGR control valve 52 corresponds to the inclination (the inclination is a negative value) of the line representing the relation between the ratio Egr and the change amount Pe. Further, as illustrated in FIG. 8(C), when the horizontal axis indicates the ratio Th of the throttle valve opening degree with respect to the maximum value of the throttle opening degree and the vertical axis indicates the change amount Pt of the EGR ratio when the ratio Th of the throttle valve opening degree is changed, the EGR ratio influence degree of the throttle valve 33 corresponds to the inclination (the inclination is a positive value) of the line representing the relation between the ratio Th and the change amount Pt.

Further, in this embodiment, the deviation of the current actual supercharging pressure with respect to the target constant supercharging pressure is calculated as the supercharging pressure deviation.

Further, it is determined whether the supercharging pressure deviation $\Delta Pim$ is a positive value and is larger than a predetermined threshold value (hereinafter, the threshold value is referred to as "positive maximum supercharging pressure deviation") $\Delta PimMaxP$ ($\Delta Pim > \Delta PimMaxP$). Here, since the actual supercharging pressure is considerably smaller than the target constant supercharging pressure when the inequation of $\Delta Pim > \Delta PimMaxP$ is established, the engine operation state becomes a state where the actual supercharging pressure needs to be largely increased. Here, in order to increase the actual supercharging pressure, the vane opening degree may be decreased, the EGR control valve opening degree may be decreased, or the throttle valve opening degree may be increased.

Therefore, when the inequation of $\Delta Pim > \Delta PimMaxP$ is established, the supercharging pressure control difficulty level Dp is calculated according to the following equation 3 by using the supercharging pressure deviation $\Delta Pim$, the supercharging pressure influence degree Kspv of the vane 35D, the decrease operation speed Krdv of the vane 35D, the supercharging pressure influence degree Kspe of the EGR control valve 52, the decrease operation speed Krde of the EGR control valve 52, the supercharging pressure influence degree Kspt of the throttle valve 33, and the increase operation speed Krit of the throttle valve 33.

$$Dp = \Delta Pim/(-Kspv \times Krdv) + \Delta Pim/(-Kspe \times Krde) + \Delta Pim/(Kspt \times Krit) \ldots (3)$$

According to the aforementioned equation 3, in the situation where it is difficult to cause the actual supercharging pressure to increase as the supercharging pressure influence degree of the vane 35D becomes smaller, since the supercharging pressure influence degree Kspv of the vane 35D is a negative value, the larger supercharging pressure control difficulty level Dp is calculated as the supercharging pressure influence degree Kspv of the vane 35D becomes smaller. Further, according to the aforementioned equation 3, in the situation where it is difficult to cause the actual supercharging pressure to increase as the decrease operation speed of the vane 35D becomes slower, the larger supercharging pressure control difficulty level Dp is calculated as the operation speed Krdv of the vane 35D becomes slower. Further, according to the aforementioned equation 3, in the situation where it is difficult to cause the actual supercharging pressure to increase as the supercharging pressure influence degree of the EGR control valve 52 becomes smaller, since the supercharging pressure influence degree Kspe of the EGR control valve 52 is a negative value, the larger supercharging pressure control difficulty level Dp is calculated as the supercharging pressure influence degree Kspe of the EGR control valve 52 becomes smaller. Further, according to the aforementioned equation 3, in the situation where it is difficult to cause the actual supercharging pressure to increase as the decrease operation speed of the EGR control valve 52 becomes slower, the larger supercharging pressure control difficulty level Dp is calculated as the decrease operation speed Krde of the EGR control valve 52 becomes slower. Further, according to the aforementioned equation 3, in the situation where it is difficult to cause the actual supercharging pressure to increase as the supercharging pressure influence degree of the throttle valve 33 becomes smaller, the larger supercharging pressure control difficulty level Dp is calculated as the supercharging pressure influence degree Kspt of the throttle valve 33 becomes smaller. Further, according to the aforementioned equation 3, in the situation where it is difficult to cause the actual supercharging pressure to increase as the increase operation speed of the throttle valve 33 becomes slower, the larger EGR ratio control difficulty level Dp is calculated as the increase operation speed Krit of the throttle valve 33 becomes slower.

Specifically, the supercharging pressure control difficulty level Dp which is calculated according to the aforementioned equation 3 accurately reflects the difficulty level in the case where the actual supercharging pressure reaches the target supercharging pressure with a predetermined target supercharging pressure followability in accordance with the supercharging pressure influence degree Kspv of the vane 35D, the operation speed Krdv of the vane 35, the supercharging pressure influence degree Kspe of the EGR control valve 52, the operation speed Krde of the EGR control valve 52, the supercharging pressure influence degree Kspt of the throttle valve 33, and the operation speed Krit of the throttle valve 33.

Meanwhile, when the inequation of $\Delta Pim > \Delta PimMaxP$ is not established, it is determined whether the supercharging pressure deviation $\Delta Pim$ is a negative value and is smaller than a predetermined threshold value (hereinafter, the threshold value is referred to as "negative maximum supercharging pressure deviation") $\Delta PimMaxN$ ($\Delta Pim < \Delta PimMaxN$). Specifically, it is determined whether the absolute value of the supercharging pressure deviation $\Delta Pim$ is larger

than the absolute value of the negative maximum supercharging pressure deviation ΔPimMaxN. Here, since the actual supercharging pressure is considerably larger than the target constant supercharging pressure when the inequation of ΔPim < ΔPimMaxN is established, the engine operation state becomes a state where the actual supercharging pressure needs to be largely decreased. Here, in order to decrease the actual supercharging pressure, the vane opening degree may be increased, the EGR control valve opening degree may be increased, or the throttle valve opening degree may be decreased.

Therefore, when the inequation of ΔPim < ΔPimMaxN is established, the supercharging pressure control difficulty level Dp is calculated according to the following equation 4 by using the supercharging pressure deviation ΔPim, the supercharging pressure influence degree Kspv of the vane 35D, the increase operation speed Kriv of the vane 35D, the supercharging pressure influence degree Kspe of the EGR control valve 52, the increase operation speed Krie of the EGR control valve 52, the supercharging pressure influence degree Kspt of the throttle valve 33, and the decrease operation speed Krdt of the throttle valve 33.

$$\mathrm{Dp} = \Delta\mathrm{Pim}/(-\mathrm{Kspv} \times \mathrm{Kriv}) + \Delta\mathrm{Pim}/(-\mathrm{Kspe} \times \mathrm{Krie}) +$$

$$\Delta\mathrm{Pim}/(\mathrm{Kspt} \times \mathrm{Krdt}) \ldots (4)$$

According to the aforementioned equation 4, in the situation where it is difficult to cause the actual supercharging pressure rate to decrease as the supercharging pressure influence degree of the vane 35D becomes smaller, since the supercharging pressure influence degree Kspv of the vane 35D is a negative value, the larger supercharging pressure control difficulty level Dp is calculated as the supercharging pressure influence degree Kspv of the vane 35D becomes smaller. Further, according to the aforementioned equation 4, in the situation where it is difficult to cause the actual supercharging pressure to decrease as the increase operation speed of the vane 35D becomes slower, the larger supercharging pressure control difficulty level Dp is calculated as the increase operation speed Kriv of the vane 35D becomes slower. Further, according to the aforementioned equation 4, in the situation where it is difficult to cause the actual EGR ratio to decrease as the supercharging pressure influence degree of the EGR control valve 52 becomes smaller, since the supercharging pressure influence degree Kspe of the EGR control valve 52 is a negative value, the larger supercharging pressure control difficulty level Dp is calculated as the supercharging pressure influence degree Kspe of the EGR control valve 52 becomes smaller. Further, according to the aforementioned equation 4, in the situation where it is difficult to cause the actual supercharging pressure to decrease as the decrease operation speed of the EGR control valve 52 becomes slower, the larger supercharging pressure control difficulty level Dp is calculated as the decrease operation speed Krde of the EGR control valve 52 becomes slower. Further, according to the aforementioned equation 4, in the situation where it is difficult to cause the actual supercharging pressure to decrease as the supercharging pressure influence degree of the throttle valve 33 becomes smaller, the larger supercharging pressure control difficulty level Dp is calculated as the supercharging pressure influence degree Kspt of the throttle valve 33 becomes smaller. Further, according to the aforementioned equation 4, in the situation where it is difficult to cause the actual supercharging pressure to decrease as the decrease operation speed of the throttle valve 33 becomes slower, the larger supercharging pressure control difficulty level Dp is calculated as the decrease operation speed Krdt of the throttle valve 33 becomes slower.

Specifically, the supercharging pressure control difficulty level Dp which is calculated according to the aforementioned equation 4 accurately reflects the difficulty level in the case where the actual supercharging pressure reaches the target supercharging pressure with a predetermined target supercharging pressure followability in accordance with the supercharging pressure influence degree Kspv of the vane 35D, the operation speed Kriv of the vane 35, the supercharging pressure influence degree Kspe of the EGR control valve 52, the operation speed Krie of the EGR control valve 52, the supercharging pressure influence degree Kspt of the throttle valve 33, and the operation speed Krdt of the throttle valve 33.

In addition, when the inequation of ΔPim > ΔPimMaxP is not established and the inequation of ΔPim < ΔPimMaxN is not established, the engine operation state is in a state where it is sufficient for the actual supercharging pressure to be increased in a relatively small amount or the engine operation state is in a state where it is sufficient for the actual supercharging pressure to be decreased in a relatively small amount. In this case, since the actual supercharging pressure change amount is relatively small, the supercharging pressure control difficulty level Dp is set as zero.

Further, in this embodiment, the supercharging pressure addition coefficient Kp is acquired from the supercharging pressure addition coefficient map illustrated in FIG. 4(B) based on the supercharging pressure control difficulty level Dp calculated as described above, and a value in which the supercharging pressure addition coefficient Kp acquired in this way is added to the current actual supercharging pressure is set as the target supercharging pressure.

According to this embodiment, the following effect may be obtained. Specifically, the EGR control valve opening degree is increased when increasing the actual EGR ratio so that the EGR ratio is controlled at the target EGR ratio. Further, an increase amount (hereinafter, the increase amount is referred to as "target increase amount") which is a target as the EGR control valve opening degree increase amount is generally set as the amount in accordance with the deviation of the actual EGR ratio with respect to the target EGR ratio. Here, since the EGR control valve opening degree may be increased by the target increase amount in a short time when the increase operation speed of the EGR control valve is fast, the EGR ratio may reach the target EGR ratio with a sufficient followability. Further, when the EGR ratio influence degree of the EGR control valve is large, the EGR ratio may reach the target EGR ratio with the small EGR control valve opening degree increase amount. Specifically, when the EGR ratio influence degree of the EGR control valve is large, since the EGR control valve opening degree may be increased by the target increase amount in a short time, the EGR ratio may reach the target EGR ratio with a sufficient followability.

Meanwhile, when the increase operation speed of the EGR control valve is slow or the EGR ratio influence degree of the EGR control valve is small, since the EGR control valve opening degree may not be increased by the target increase amount in a short time, the EGR ratio may not reach the target EGR ratio with a sufficient followability. Further, when the control of the EGR ratio is repeated, the actual EGR ratio largely deviates from the preferable EGR ratio. Further, the EGR ratio is, for example, a parameter which contributes to the emission reduction in the exhaust gas discharged from the combustion chamber. Accordingly, when the actual EGR ratio largely deviates from the preferable EGR ratio, the emission in the exhaust gas may be reduced in a desired manner.

Accordingly, in the case where the actual EGR ratio is increased so that the EGR ratio is controlled at the target EGR ratio, in order to set the target EGR ratio for causing the EGR ratio to reach the target EGR ratio with a sufficient followability, it is important to take account of the increase operation speed of the EGR control valve and the EGR ratio influence degree of the EGR control valve.

Of course, since the same applies to a case where the actual EGR ratio is decreased so that the EGR ratio is controlled at the target EGR ratio, in this case, in order to set the target EGR ratio for causing the EGR ratio to reach the target EGR ratio with a sufficient followability, it is important to take account of the decrease operation speed of the EGR control valve and the EGR ratio influence degree of the EGR control valve.

Further, in addition to this, as described above, the operation state of the vane 35D also influences the EGR ratio. For this reason, due to the aforementioned reason, in order to set the target EGR ratio for causing the EGR ratio to reach the target EGR ratio with a sufficient followability, it is important to take account of the operation speed of the vane (specifically, the increase operation speed or the decrease operation speed of the vane) and the EGR ratio influence degree of the vane.

In addition, as described above, the operation state of the throttle valve 33 also influences the EGR ratio. For this reason, due to the aforementioned reason, in order to set the target EGR ratio for causing the EGR ratio to reach the target EGR ratio with a sufficient followability, it is important to take account of the operation speed of the throttle valve (specifically, the increase operation speed or the decrease operation speed of the throttle valve) and the EGR ratio influence degree of the throttle valve.

Here, in the aforementioned embodiment, the EGR ratio control difficulty level which represents the possibility that the actual EGR ratio may reach the target EGR ratio with a sufficient followability is calculated by taking, not only the operation speed of the EGR control valve 52 and the EGR ratio influence degree of the EGR control valve, into account as the parameter influencing the followability of the actual EGR ratio with respect to the target EGR ratio, but also the operation speed of the vane 35D, the EGR ratio influence degree of the vane, the operation speed of the throttle valve 33, and the EGR ratio influence degree of the throttle valve as the parameter influencing the followability of the actual EGR ratio with respect to the target EGR ratio, the target EGR ratio is set based on the EGR ratio control difficulty level, and the actual EGR ratio is controlled at the target EGR ratio. For this reason, the actual EGR ratio may reach the target EGR ratio with a sufficient followability. Accordingly, according to the aforementioned embodiment, since at least the actual EGR ratio does not largely deviate from the preferable EGR ratio, there is an effect that the emission in the exhaust gas may be reduced in a desired manner.

Further, when the actual supercharging pressure is increased so that the supercharging pressure is controlled at the target supercharging pressure, the vane opening degree is decreased. Further, a decrease amount (hereinafter, the decrease amount is referred to as "target decrease amount") which is a target as the vane opening degree decrease amount is generally set as the amount in accordance with the deviation of the actual supercharging pressure with respect to the target supercharging pressure. Here, since the vane opening degree may be decreased by the target decrease amount in a short time when the decrease operation speed of the vane is fast, the supercharging pressure may reach the target supercharging pressure with a sufficient followability. Further, when the supercharging pressure influence degree of the vane is large, the supercharging pressure may reach the target supercharging pressure even at the small vane opening degree decrease amount. Specifically, when the supercharging pressure influence degree of the vane is large, the vane opening degree may be decreased by the target decrease amount in a short time, and hence the supercharging pressure may reach the target supercharging pressure with a sufficient followability.

Meanwhile, when the decrease operation speed of the vane is slow or the supercharging pressure influence degree of the vane is small, the vane opening degree may not be decreased by the target decrease amount in a short time, and hence the supercharging pressure may not reach the target supercharging pressure with a sufficient followability. Further, when the control of the supercharging pressure is repeated, the actual supercharging pressure largely deviates from the preferable supercharging pressure. Further, the supercharging pressure contributes to, for example, the intake gas amount and also contributes to the combustion of the fuel inside the combustion chamber. Eventually, it is the parameter which contributes to the output performance of the internal combustion engine 10. Accordingly, when the actual supercharging pressure largely deviates from the preferable supercharging pressure, the output performance of the internal combustion engine 10 may not be exhibited in a desired manner.

Accordingly, in the case where the actual supercharging pressure is increased so that the supercharging pressure is controlled at the target supercharging pressure, in order to set the target supercharging pressure for causing the supercharging pressure to reach the target supercharging pressure with a sufficient followability, it is important to take account of the decrease operation speed of the vane and the supercharging pressure influence degree of the vane.

Of course, since the same applies to a case where the actual supercharging pressure is decreased so that the supercharging pressure is controlled at the target supercharging pressure, in this case, in order to set the target supercharging pressure for causing the supercharging pressure to reach the target supercharging pressure with a sufficient followability, it is important to take account of the increase operation speed of the vane and the supercharging pressure influence degree of the vane.

Further, in addition to this, as described above, the operation state of the EGR control valve 52 also influences the supercharging pressure. For this reason, due to the aforementioned reason, in order to set the target supercharging pressure for causing the supercharging pressure to reach the target supercharging pressure with a sufficient followability, it is important to take account of the operation speed of the EGR control valve (specifically, the increase operation speed or the decrease operation speed of the EGR control valve) and the supercharging pressure influence degree of the EGR control valve.

In addition, as described above, the operation state of the throttle valve 33 also influences the supercharging pressure. For this reason, due to the aforementioned reason, in order to set the target supercharging pressure for causing the supercharging pressure to reach the target supercharging pressure with a sufficient followability, it is important to take account of the operation speed of the throttle valve (specifically, the increase operation speed or the decrease operation speed of the throttle valve) and the supercharging pressure influence degree of the throttle valve.

Here, in the aforementioned embodiment, the supercharging pressure control difficulty level which represents the possibility that the actual supercharging pressure may reach the target supercharging pressure with a sufficient followability is calculated by taking, not only the operation speed of the vane 35D and the supercharging pressure influence degree of the vane as the parameter influencing the followability of the actual supercharging pressure on the target supercharging pressure, but also the operation speed of the EGR control valve 52, into account the supercharging pressure influence degree of the EGR control valve, the operation speed of the throttle valve 33, and the supercharging pressure influence degree of the throttle valve as the parameter influencing the followability of the actual supercharging pressure with respect to the target supercharging pressure, the target supercharging pressure is set based on the supercharging pressure control difficulty level, and the actual supercharging pressure is controlled at the target supercharging pressure. For this reason, the actual supercharging pressure may reach the target supercharging pressure with a sufficient followability. Accordingly, according to the aforementioned embodiment, since at least the actual supercharging pressure does not largely deviate from the preferable supercharging pressure, there is an effect that the desired output performance of the internal combustion engine may be exhibited.

In addition, in the aforementioned embodiment, the EGR ratio influence degree of the EGR control valve 52 is a constant value. However, when the EGR control valve opening degree is changed by a predetermined value, the EGR ratio change amount with a change in the EGR control valve opening degree may be different in accordance with the EGR control valve opening degree at that time. Accordingly, in such a case, the EGR ratio influence degree of the EGR control valve 52 is obtained in advance by an experiment or the like in accordance with the EGR control valve opening degree, the EGR ratio influence degree is stored in the electronic control device 60 in the form of the map of the function of the EGR control valve opening degree, the EGR ratio influence degree of the EGR control valve is acquired from the map in accordance with the EGR control valve opening degree at that time during the engine operation, and the EGR ratio influence degree of the EGR control valve acquired in this way may be used for the setting of the EGR ratio control difficulty level (specifically, the setting of the target EGR ratio).

Similarly, in the aforementioned embodiment, the EGR ratio influence degree of the vane 35D and the EGR ratio influence degree of the throttle valve 33 are also constant values. However, when the vane opening degree is changed by a predetermined value, the EGR ratio change amount with a change in the vane opening degree may be different in accordance with the vane opening degree at that time. Then, when the throttle valve opening degree is changed by a predetermined value, the EGR ratio change amount with a change in the throttle valve may be different in accordance with the throttle valve opening degree at that time. Accordingly, in such a case, the EGR ratio influence degree of the vane 35D in accordance with the vane opening degree and the EGR ratio influence degree of the throttle valve 33 in accordance with the throttle valve opening degree are obtained in advance by an experiment or the like, the EGR ratio influence degree is stored in the electronic control device 60 in the form of the map of the function of the vane opening degree and the map of the function of the throttle valve opening degree, the EGR ratio influence degree of the vane and the EGR ratio influence degree of the throttle valve are respectively acquired from the map in accordance with the vane opening degree at that time and the map in accordance with the throttle valve opening degree at that time during the engine operation, and the EGR ratio influence degree of the vane and the EGR ratio influence degree of the throttle valve acquired in this way may be used for the setting of the EGR ratio control difficulty level (specifically, the setting of the target EGR ratio).

Further, in the aforementioned embodiment, the supercharging pressure influence degree of the vane 35D is a constant value. However, when the vane opening degree is changed by a predetermined value, the supercharging pressure change amount with a change in the vane opening degree may be different in accordance with the vane opening degree at that time. Accordingly, in such a case, the supercharging pressure influence degree of the vane 35D in accordance with the vane opening degree is obtained in advance by an experiment or the like, the supercharging pressure influence degree is stored in the electronic control device 60 in the form of the map of the function of the vane opening degree, the supercharging pressure influence degree of the vane is acquired from the map in accordance with the vane opening degree at that time during the engine operation, and the supercharging pressure influence degree of the vane acquired in this way may be used for the setting of the supercharging pressure control difficulty level (specifically, the setting of the target supercharging pressure).

Similarly, in the aforementioned embodiment, the supercharging pressure influence degree of the EGR control valve 52 and the supercharging pressure influence degree of the throttle valve 33 are also constant values. However, when the EGR control valve opening degree is changed by a predetermined value, the supercharging pressure change amount with a change in the EGR control valve opening degree may be different in accordance with the EGR control valve opening degree at that time. Then, when the throttle valve opening degree is changed by a predetermined value, the supercharging pressure change amount with a change in the throttle valve may be different in accordance with the throttle valve opening degree at that time. Accordingly, in such a case, the supercharging pressure influence degree of the EGR control valve 52 in accordance with the EGR control valve opening degree and the supercharging pressure influence degree of the throttle valve 33 in accordance with the throttle valve opening degree are obtained in advance by an experiment or the like, the supercharging pressure influence degree is stored in the electronic control device 60 in the form of the map of the function of the EGR control valve opening degree and the map of the function of the throttle valve opening degree, the supercharging pressure influence degree of the EGR control valve and the supercharging pressure influence degree of the throttle valve are respectively acquired from the map in accordance with the EGR control valve opening degree at that time and the map in accordance with the throttle valve opening degree at that time during the engine operation, and the supercharging pressure influence degree of the EGR control valve and the supercharging pressure influence degree of the throttle valve acquired in this way may be used for the setting of the supercharging pressure control difficulty level (specifically, the setting of the target supercharging pressure).

Further, in the aforementioned embodiment, the increase operation speed of the EGR control valve 52 is a constant value. However, the increase operation speed of the EGR control valve 52 may be different in accordance with the EGR control valve opening degree at that time. Accordingly, in such a case, the increase operation speed of the EGR control valve 52 in accordance with the EGR control valve opening degree is obtained by an experiment or the like, the increase operation speed is stored in the electronic control device 60 in the form of the map of the function of the EGR control valve opening degree, the increase operation speed of the EGR control valve is acquired from the map in accordance with the EGR control valve opening degree at that time during the engine operation, and the increase operation speed of the EGR control valve acquired in this way may be used for the setting of the EGR ratio control difficulty level and the supercharging pressure control difficulty level (specifically, the setting of the target EGR ratio and the target supercharging pressure).

Similarly, in the aforementioned embodiment, the decrease operation speed of the EGR control valve 52 is also a constant value. However, the decrease operation speed of the EGR control valve 52 may be also different in accordance with the EGR control valve opening degree at that time. Accordingly, in such a case, the decrease operation speed of the EGR control valve 52 in accordance with the EGR control valve opening degree is obtained in advance by an experiment or the like, the decrease operation speed is stored in the electronic control device 60 in the form of the map of the function of the EGR control valve opening degree, the decrease operation speed of the EGR control valve is acquired from the map in accordance with the EGR control valve opening degree at that time during the engine operation, and the decrease operation speed of the EGR control valve acquired in this way may be used for the setting of the EGR ratio control difficulty level and the supercharging pressure control difficulty level (specifically, the setting of the target EGR ratio and the target supercharging pressure).

Similarly, in the aforementioned embodiment, the increase operation speed and the decrease operation speed of the vane 35D are also constant values. However, the increase operation speed and the decrease operation speed of the vane 35D may be also different in accordance with the vane opening degree at that time. Accordingly, in such a case, the increase operation speed and the decrease operation speed of the vane 35D in accordance with the vane opening degree are obtained in advance by an experiment or the like, the increase operation speed and the decrease operation speed are stored in the electronic control device 60 in the form of the map of the function of the vane opening degree, the increase operation speed or the decrease operation speed of the vane is acquired from the map in accordance with the vane opening degree at that time during the engine operation, and the increase operation speed or the decrease operation speed of the vane acquired in this way may be used for the setting of the EGR ratio control difficulty level and the supercharging pressure control difficulty level (specifically, the setting of the target EGR ratio and the target supercharging pressure).

Similarly, in the aforementioned embodiment, the increase operation speed and the decrease operation speed of the throttle valve 33 are also constant values. However, the increase operation speed and the decrease operation speed of the throttle valve 33 may be also different in accordance with the throttle valve opening degree at that time. Accordingly, in such a case, the increase operation speed and the decrease operation speed of the throttle valve 33 in accordance with the throttle valve opening degree are obtained in advance by an experiment or the like, the increase operation speed and the decrease operation speed are stored in the electronic control device 60 in the form of the map of the function of the throttle valve opening degree, the increase operation speed or the decrease operation speed of the throttle valve is acquired from the map in accordance with the throttle valve opening degree at that time during the engine operation, and the increase operation speed or the decrease operation speed of the throttle valve acquired in this way may be used for the setting of the EGR ratio control difficulty level and the supercharging pressure control difficulty level (specifically, the setting of the target EGR ratio and the target supercharging pressure).

Further, in the aforementioned embodiment, as illustrated in FIG. 4(A), when the EGR ratio control difficulty level De is a value between zero and the positive maximum value DeMaxP, the EGR ratio addition coefficient Ke is set as a value which becomes smaller as the EGR ratio control difficulty level De becomes larger while being in inverse proportional to the EGR ratio control difficulty level De. However, according to the present invention, since the EGR ratio addition coefficient may be set so as to calculate the target EGR ratio causing the EGR ratio to be controlled at the target EGR ratio with a predetermined target EGR ratio followability by adding the EGR ratio addition coefficient to the current actual EGR ratio, the EGR ratio addition coefficient may not be inverse proportional to the EGR ratio control difficulty level De. Accordingly, when the EGR ratio control difficulty level De is a value between zero and the positive maximum value DeMaxP, at least the EGR ratio addition coefficient may be set to the smaller value as the EGR ratio control difficulty level De becomes higher.

Similarly, in the aforementioned embodiment, as illustrated in FIG. 4(A), when the EGR ratio control difficulty level De is a value between zero and the negative maximum value DeMaxN, the EGR ratio addition coefficient Ke is set as a value of which the absolute value becomes smaller as the absolute value of the EGR ratio the difficulty level De becomes larger while being inverse proportional to the EGR ratio control difficulty level De. However, when the EGR ratio control difficulty level De is a value between zero and the negative maximum value DeMaxN, at least the EGR ratio addition coefficient may be set as a value of which the absolute value becomes smaller as the absolute value of the EGR ratio control difficulty level De becomes higher.

Further, in the aforementioned embodiment, as illustrated in FIG. 4(B), when the supercharging pressure control difficulty level Dp is a value between zero and the positive maximum value DpMaxP, the supercharging pressure addition coefficient Kp is set as a value which becomes smaller as the supercharging pressure control difficulty level Dp becomes larger while being inverse proportional to the supercharging pressure control difficulty level Dp. However, according to the present invention, since the supercharging pressure addition coefficient may be set so as to calculate the target supercharging pressure for causing the supercharging pressure to be controlled at the target supercharging pressure with a predetermined target supercharging pressure followability by adding the supercharging pressure addition coefficient to the current actual supercharging pressure, the supercharging pressure addition coefficient may not be inverse proportional to the supercharging pressure control difficulty level Dp. Accordingly, when the supercharging pressure control difficulty level Dp is a value between zero and the positive maximum value DpMaxP, at least the supercharging pressure addition coefficient may be set to the smaller value as the supercharging pressure control difficulty level Dp becomes higher.

Similarly, in the aforementioned embodiment, as illustrated in FIG. 4(B), when the supercharging pressure control difficulty level Dp is a value between zero and the negative maximum value DpMaxN, the supercharging pressure addition coefficient Kp is set as a value of which the absolute value becomes smaller as the absolute value of the supercharging pressure difficulty level Dp becomes smaller while being inverse proportional to the supercharging pressure control difficulty level Dp. However, when the supercharging pressure control difficulty level Dp is a value between zero and the negative maximum value DpMaxN, at least the supercharging pressure addition coefficient may be set as a value of which the absolute value becomes smaller as the absolute value of the supercharging pressure control difficulty level Dp becomes higher.

Further, in the aforementioned embodiment, when the EGR ratio deviation is larger than the positive maximum EGR ratio deviation, the decrease operation speed of the vane 35D is used for the setting of the EGR ratio control difficulty level (specifically, the setting of the target EGR ratio) regardless of the engine operation state where at least the supercharging pressure needs to be increased or the engine operation state where at least the supercharging pressure needs to be decreased. However, when the EGR ratio deviation is larger than the positive maximum EGR ratio deviation, the decrease operation speed of the vane 35D may be used for the setting of the EGR ratio control difficulty level or the increase operation speed of the vane 35D may be used for the setting of the EGR ratio control difficulty level in accordance with the engine operation state where at least the supercharging pressure needs to be increased or the engine operation state where at least the supercharging pressure needs to be decreased. Specifically, in the case of the engine operation state where at least the supercharging pressure needs to be increased, at least the vane opening degree is decreased. Accordingly, in this case, when the EGR ratio deviation is larger than the positive maximum EGR ratio deviation, the decrease operation speed of the vane 35D is used for the setting of the EGR ratio control difficulty level. Meanwhile, in the case of the engine operation state where at least the supercharging pressure needs to be decreased, at least the vane opening degree is decreased. Accordingly, in this case, when the EGR ratio deviation is larger than the positive maximum EGR ratio deviation, the increase operation speed of the vane 35D is used for the setting of the EGR ratio control difficulty level.

Further, in the aforementioned embodiment, when the EGR ratio deviation is smaller than the negative maximum EGR ratio deviation, the increase operation speed of the vane 35D is used for the setting of the EGR ratio control difficulty level (specifically, the setting of the target EGR ratio) regardless of the engine operation state where at least the supercharging pressure needs to be increased or the engine operation state where at least the supercharging pressure needs to be decreased. However, when the EGR ratio deviation is smaller than the negative maximum EGR ratio deviation, the increase operation speed of the vane 35D may be used for the setting of the EGR ratio control difficulty level or the decrease operation speed of the vane 35D may be used for the setting of the EGR ratio control difficulty level in accordance with the engine operation state where at least the supercharging pressure needs to be increased or the engine operation state where at least the supercharging pressure needs to be decreased. Specifically, in the case of the engine operation state where at least the supercharging pressure needs to be decreased, at least the vane opening degree is increased. Accordingly, in this case, when the EGR ratio deviation is smaller than the negative maximum EGR ratio deviation, the increase operation speed of the vane 35D is used for the setting of the EGR ratio control difficulty level. Meanwhile, in the case of the engine operation state where at least the supercharging pressure needs to be increased, at least the vane opening degree is decreased. Accordingly, in this case, when the EGR ratio deviation is smaller than the negative maximum EGR ratio deviation, the decrease operation speed of the vane 35D is used for the setting of the EGR ratio control difficulty level.

Similarly, in the aforementioned embodiment, when the EGR ratio deviation is larger than the positive maximum EGR ratio deviation, the decrease operation speed of the throttle valve 33 is used for the setting of the EGR ratio control difficulty level (specifically, the setting of the target EGR ratio) regardless of the engine operation state where at least the intake gas amount needs to be increased or the engine operation state where at least the intake gas amount needs to be decreased. Meanwhile, when the EGR ratio deviation is smaller than the negative maximum EGR ratio deviation, the increase operation speed of the throttle valve 33 is used for the setting of the EGR ratio control difficulty level (specifically, the setting of the target EGR ratio) regardless of the engine operation state where at least the intake gas amount needs to be increased or the engine operation state where at least the intake gas amount needs to be decreased. However, when the EGR ratio deviation is larger than the positive maximum EGR ratio deviation or the EGR ratio deviation is smaller than the negative maximum EGR ratio deviation, the increase operation speed of the throttle valve 33 may be used for the setting of the EGR ratio control difficulty level or the decrease operation speed of the throttle valve 33 may be used for the setting of the EGR ratio control difficulty level in accordance with the engine operation state where at least the intake gas amount needs to be increased or the engine operation state where at least the intake gas amount needs to be decreased. Specifically, in the engine operation state where at least the intake gas amount needs to be increased, at least the throttle valve opening degree is increased. Accordingly, in this case, when the EGR ratio deviation is larger than the positive maximum EGR ratio deviation or the EGR ratio deviation is smaller than the negative maximum EGR ratio deviation, the increase operation speed of the throttle valve 33 is used for the setting of the EGR ratio control difficulty level. Meanwhile, in the engine operation state where at least the intake gas amount needs to be decreased, at least the throttle valve opening degree is decreased. Accordingly, in this case, when the EGR ratio deviation is larger than the positive maximum EGR ratio deviation or the EGR ratio deviation is smaller than the negative maximum EGR ratio deviation, the decrease operation speed of the throttle valve 33 is used for the setting of the EGR ratio control difficulty level.

Further, in the aforementioned embodiment, when the supercharging pressure deviation is larger than the positive maximum supercharging pressure deviation, the decrease operation speed of the EGR control valve 52 is used for the setting of the supercharging pressure control difficulty level (specifically, the setting of the target supercharging pressure) regardless of the engine operation state where at least the EGR ratio needs to be increased or the engine operation state where at least the EGR ratio needs to be decreased. However, when the supercharging pressure deviation is larger than the positive maximum supercharging pressure deviation, the decrease operation speed of the EGR control valve 52 may be used for the setting of the supercharging pressure control difficulty level or the increase operation speed of the EGR control valve 52 may be used for the setting of the supercharging pressure control difficulty level in accordance with the engine operation state where at least the EGR ratio needs to be increased or the engine operation state where at least the EGR ratio needs to be decreased. Specifically, in the engine operation state where at least the EGR ratio needs to be increased, at least the EGR control valve opening degree is increased. Accordingly, in this case, when the supercharging pressure deviation is larger than the positive maximum supercharging pressure deviation, the increase operation speed of the EGR control valve 52 is used for the setting of the supercharging pressure control difficulty level. Meanwhile, in the engine operation state where at least the EGR ratio needs to be decreased, at least the EGR control valve opening degree is decreased. Accordingly, in this case, when the supercharging pressure deviation is larger than the positive maximum supercharging pressure deviation, the decrease operation speed of the EGR control valve 52 is used for the setting of the supercharging pressure control difficulty level.

Further, in the aforementioned embodiment, when the supercharging pressure deviation is smaller than the negative maximum supercharging pressure deviation, the increase operation speed of the EGR control valve 52 is used for the setting of the supercharging pressure control difficulty level (specifically, the setting of the target supercharging pressure) regardless of the engine operation state where at least the EGR ratio needs to be increased or the engine operation state where at least the EGR ratio needs to be decreased. However, when the supercharging pressure deviation is smaller than the negative maximum supercharging pressure deviation, the increase operation speed of the EGR control valve 52 may be used for the setting of the supercharging pressure control difficulty level or the decrease operation speed of the EGR control valve 52 may be used for the setting of the supercharging pressure control difficulty level in accordance with the engine operation state where at least the EGR ratio needs to be increased or the engine operation state where at least the EGR ratio needs to be decreased. Specifically, in the engine operation state where at least the EGR ratio needs to be decreased, at least the EGR control valve opening degree is decreased. Accordingly, in this case, when the supercharging pressure deviation is smaller than the negative maximum supercharging pressure deviation, the decrease operation speed of the EGR control valve 52 is used for the setting of the supercharging pressure control difficulty level. Meanwhile, in the case of the engine operation state where at least the EGR ratio needs to be increased, at least the EGR control valve opening degree is increased. Accordingly, in this case, when the supercharging pressure deviation is smaller than the negative maximum supercharging pressure deviation, the increase operation speed of the EGR control valve 52 is used for the setting of the supercharging pressure control difficulty level.

Similarly, in the aforementioned embodiment, when the supercharging pressure deviation is larger than the positive maximum supercharging pressure deviation, the decrease operation speed of the throttle valve 33 is used for the setting of the supercharging pressure control difficulty level (specifically, the setting of the target supercharging pressure) regardless of the engine operation state where at least the intake gas amount needs to be increased or the engine operation state where at least the intake gas amount needs to be decreased. Meanwhile, when the supercharging pressure deviation is smaller than the negative maximum supercharging pressure deviation, the increase operation speed of the throttle valve 33 is used for the setting of the supercharging pressure control difficulty level (specifically, the setting of the target supercharging pressure) regardless of the engine operation state where at least the intake gas amount needs to be increased or the engine operation state where at least the intake gas amount needs to be decreased. However, when the supercharging pressure deviation is larger than the positive maximum supercharging pressure deviation or the supercharging pressure deviation is smaller than the negative maximum supercharging pressure deviation, the increase operation speed of the throttle valve 33 may be used for the setting of the EGR ratio control difficulty level or the decrease operation speed of the throttle valve 33 may be used for the setting of the EGR ratio control difficulty level in accordance with the engine operation state where at least the intake gas amount needs to be increased or the engine operation state where at least the intake gas amount needs to be decreased. Specifically, in the case of the engine operation state where at least the intake gas amount needs to be increased, at least the throttle valve opening degree is increased. Accordingly, in this case, when the supercharging pressure deviation is larger than the positive maximum supercharging pressure deviation or the supercharging pressure deviation is smaller than the negative maximum supercharging pressure deviation, the increase operation speed of the throttle valve 33 is used for the setting of the supercharging pressure control difficulty level. Meanwhile, in the case of the engine operation state where at least the intake gas amount needs to be decreased, at least the throttle valve opening degree is decreased. Accordingly, in this case, when the supercharging pressure deviation is larger than the positive maximum supercharging pressure deviation or the supercharging pressure deviation is smaller than the negative maximum supercharging pressure deviation, the decrease operation speed of the throttle valve 33 is used for the setting of the supercharging pressure control difficulty level.

Further, in the aforementioned embodiment, on assumption that the operation states of the EGR control valve, the vane, and the throttle valve influence the EGR ratio, the EGR ratio control difficulty level is calculated taking account of the operation speeds of the EGR control valve, the vane, and the throttle valve and the EGR ratio influence degree of the EGR control valve, the vane, and the throttle valve, the target EGR ratio is set taking account of the calculated EGR ratio control difficulty level, and the EGR ratio is controlled at the target EGR ratio, thereby controlling the actual EGR ratio at the target EGR ratio with a predetermined target EGR ratio followability.

However, in a broad sense, the control device of the present invention may be applied to the internal combustion engine including two different control subjects capable of directly controlling the first control amount (for example, the EGR ratio of the aforementioned embodiment) and the second control amount (for example, the supercharging pressure of the aforementioned embodiment) as two different control amounts interacting with each other, where the two control subjects correspond to the first control subject (for example, the EGR control valve of the aforementioned embodiment) and the second control subject (for example, the vane of the aforementioned embodiment). In this case, the control device of the present invention includes a target value setting means for setting the target value of the first control amount as the first target control amount (for example, the target EGR ratio of the aforementioned embodiment) and setting the target value of the second control amount as the second target control amount (for example, the target supercharging pressure of the aforementioned embodiment) and a control amount control means for controlling the first control amount at the first target control amount by controlling the operation state (for example, the EGR control valve opening degree of the aforementioned embodiment) of the first control subject and controlling the second control amount at the second target control amount by controlling the operation state (for example, the vane opening degree of the aforementioned embodiment) of the second control subject.

Further, in a broad sense, the control device of the present invention sets the first target control amount (for example, the target EGR ratio of the aforementioned embodiment) that is the target value of the first control amount in which the first control amount may be controlled at the target value with a predetermined followability taking account of at least one of the first operation speed (for example, the operation speed of the EGR control valve of the aforementioned embodiment) of the first control subject when the control amount control means gives the instruction (for example, the EGR control valve opening degree of the aforementioned embodiment instruction) for changing the operation state of the first control subject to the first control subject and a degree of influence (for example, the EGR ratio influence degree of the EGR control valve of the aforementioned embodiment) of the first control subject on the first control amount as the degree of the influence on the first control amount due to the change of the operation state of the first control subject and at least one of the second operation speed (for example, the operation speed of the vane of the aforementioned embodiment) of the operation speed of the second control subject when the control amount control means gives the instruction (for example, the vane opening degree of the aforementioned embodiment instruction) for changing the operation state of the second control subject to the second control subject and a degree of influence (for example, the EGR ratio influence degree of the vane of the aforementioned embodiment) of the second control subject on the first control amount as the degree of the influence on the first control amount due to the change of the operation state of the second control subject.

Further, in a broad sense, the control device of the present invention sets the target value of the first control amount as the first target constant control amount (for example, the target constant EGR ratio of the aforementioned embodiment) in accordance with the operation state of the internal combustion engine when the operation state of the internal combustion engine is in the constant operation state, sets an index representing the possibility that the first current control amount is controlled at the first target constant control amount with the predetermined followability when the first current control amount is controlled at the first target constant control amount set in accordance with the current operation state of the internal combustion engine on assumption that the current operation state of the internal combustion engine is in the constant operation state as the first following index (for example, the EGR ratio control difficulty level of the aforementioned embodiment) based on at least one of the first operation speed and a degree of influence of the first control subject on the first control amount and at least one of the second operation speed and a degree of influence of the second control subject on the first control amount, and sets the first target control amount in accordance with the first following index, thereby taking into account at least one of the first operation speed and a degree of influence of the first control subject on the first control amount and at least one of the second operation speed and a degree of influence of the second control subject on the first control amount in the setting of the first target control amount.

Further, in a broad sense, the control device of the present invention calculates the deviation of the first current control amount with respect to the first target constant control amount (for example, the target constant EGR ratio of the aforementioned embodiment) set in accordance with the current operation state of the internal combustion engine as the first control amount deviation (for example, the EGR ratio deviation of the aforementioned embodiment) on assumption that the current operation state of the internal combustion engine is in the constant operation state, calculates a value in which the first control amount deviation is corrected in accordance with the first following index as the first control amount correction deviation (for example, the EGR ratio addition coefficient of the aforementioned embodiment), and sets a value in which the first control amount correction deviation is added to the first current control amount as the first target control amount, thereby taking into account at least one of the first operation speed and a degree of influence of the first control subject on the first control amount and at least one of the second operation speed and a degree of influence of the second control subject on the first control amount in the setting of the first target control amount.

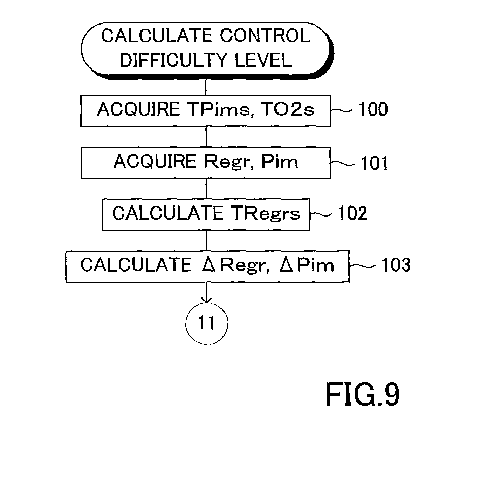

An example of the routine which executes the calculation of the EGR ratio control difficulty level and the supercharging pressure control difficulty level according to the aforementioned embodiment is illustrated in FIGS. 9 to 12. When the routine starts, first, in step 100, the target constant supercharging pressure TPims is acquired from the target constant supercharging pressure map of FIG. 3(A) based on the current engine rotation speed N and the current engine load L, and the target constant oxygen concentration TO2s is acquired from the target constant oxygen concentration map of FIG. 3(B) based on the current engine rotation speed N and the current engine load L. Subsequently, in step 101, the current actual EGR ratio Regr and the current actual supercharging pressure Pim are acquired. Subsequently, in step 102, the target constant EGR ratio TRegrs is calculated based on the target constant supercharging pressure TPims and the target constant oxygen concentration TO2s acquired in step 100. Subsequently, in step 103, the deviation of the current actual EGR ratio Regr acquired in step 101 with respect to the target constant EGR ratio TRegrs acquired in step 102 is calculated as the EGR ratio deviation ΔRegr, and the deviation of the current actual supercharging pressure Pim acquired in step 101 with respect to the target constant supercharging pressure TPims acquired in step 100 is calculated as the supercharging pressure deviation ΔPim.

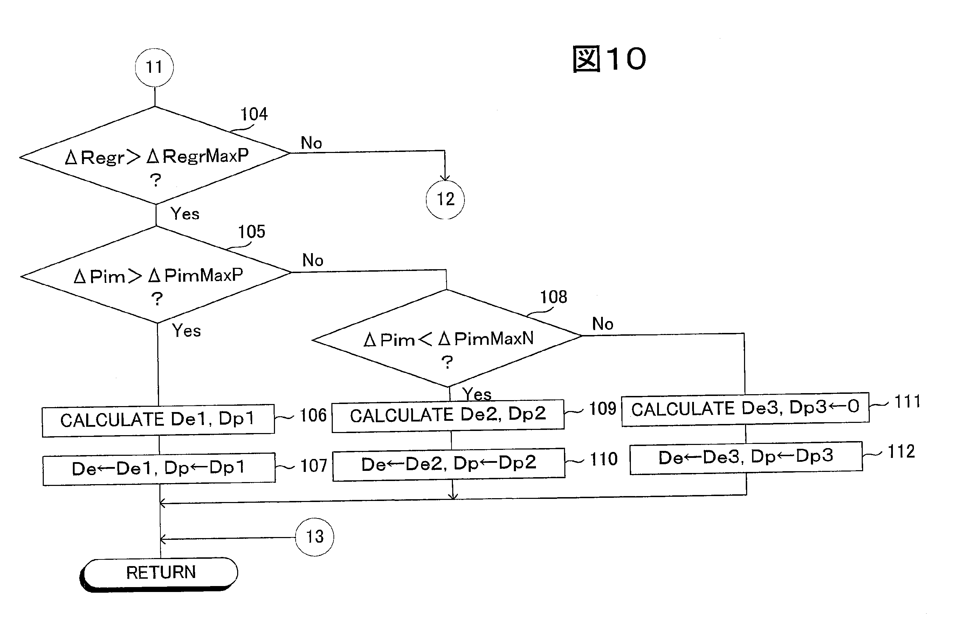

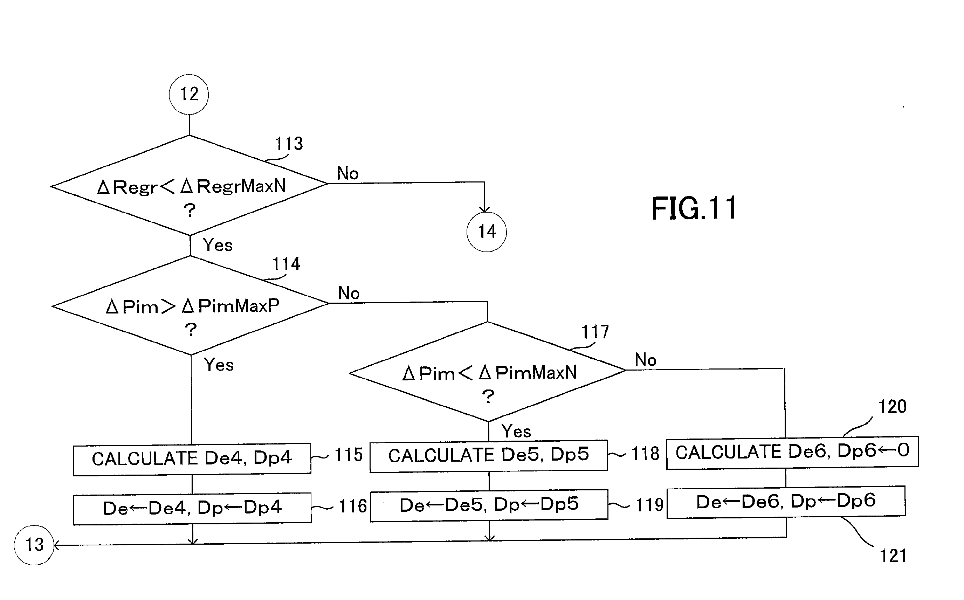

Subsequently, in step 104 of FIG. 10, it is determined whether the EGR ratio deviation ΔRegr calculated in step 103 is larger than the positive maximum EGR ratio deviation ΔRegrMaxP (ΔRegr > ΔRegrMaxP). Here, when it is determined that the inequation of ΔRegr > ΔRegrMaxP is established, the routine proceeds to step 105. Meanwhile, when it is determined that the inequation of ΔRegr ≤ ΔRegrMaxP is established, the routine proceeds to step 113 of FIG. 11.

In step 104, when it is determined that the inequation of ΔRegr > ΔRegrMaxP is established and the routine proceeds to step 105, it is determined whether the supercharging pressure deviation ΔPim calculated in step 103 is larger than the positive maximum supercharging pressure deviation ΔPimMaxP (ΔPim > ΔPimMaxP). Here, when it is determined that the inequation of ΔPim > ΔPimMaxP is established, the routine proceeds to step 106. Meanwhile, when it is determined that the inequation of ΔPim ≤ ΔPimMaxP is established, the routine proceeds to step 108.

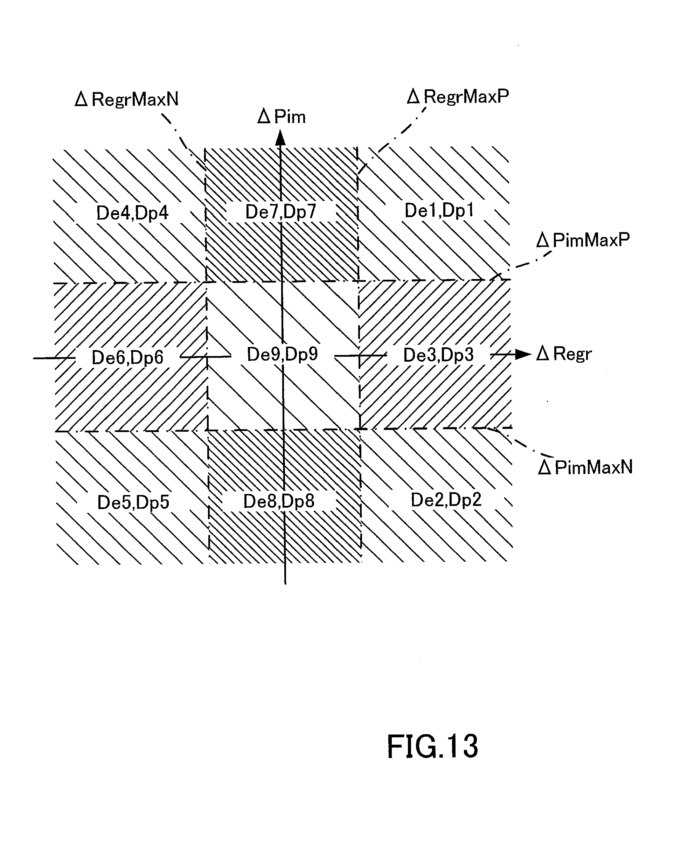

In step 105, when it is determined that the inequation of ΔPim > ΔPimMaxP is established and the routine proceeds to step 106, the inequation of ΔRegr > ΔRegrMaxP and ΔPim > ΔPimMaxP is established since it is determined that the inequation of ΔRegr > ΔRegrMaxP is established in step 104. Accordingly, the engine operation state at this time becomes the state of the regions indicated by the reference numerals De1 and Dp1 illustrated in FIG. 13. In this case, in step 106, the EGR ratio control difficulty level De1 is calculated according to the aforementioned equation 1, and the supercharging pressure control difficulty level Dp1 is calculated according to the aforementioned equation 3. Subsequently, in step 107, the EGR ratio control difficulty level De1 calculated in step 106 is input to the EGR ratio control difficulty level De, the supercharging pressure control difficulty level Dp1 calculated in step 106 is input to the supercharging pressure control difficulty level Dp, and the routine ends. In this case, in step 11 of FIG. 6, the EGR ratio control difficulty level De1 calculated in step 106 is acquired as the EGR ratio control difficulty level De, and the supercharging pressure control difficulty level Dp1 calculated in step 106 is acquired as the supercharging pressure control difficulty level Dp.

Meanwhile, in step 105, when it is determined that the inequation of ΔPim ≤ ΔPimMaxP is established and the routine proceeds to step 108, it is determined whether the supercharging pressure deviation ΔPim calculated in step 103 is smaller than the negative maximum supercharging pressure deviation ΔPimMaxN (ΔPim < ΔPimMaxN). Here, when it is determined that the inequation of ΔPim < ΔPimMaxN is established, the routine proceeds to step 109. Meanwhile, when it is determined that the inequation of ΔPim ≥ ΔPimMaxN is established, the routine proceeds to step 111.

In step 108, when it is determined that the inequation of ΔPim < ΔPimMaxN is established and the routine proceeds to step 109, the inequation of ΔRegr > ΔRegrMaxP and ΔPim < ΔPimMaxN is established since it is determined that the inequation of ΔRegr > ΔRegrMaxP is established in step 104. Accordingly, the engine operation state at this time becomes the state of the regions indicated by the reference numerals De2 and Dp2 illustrated in FIG. 13. In this case, in step 109, the EGR ratio control difficulty level De2 is calculated according to the aforementioned equation 1, and the supercharging pressure control difficulty level Dp2 is calculated according to the aforementioned equation 4. Subsequently, in step 110, the EGR ratio control difficulty level De2 calculated in step 109 is input to the EGR control difficulty level De, the supercharging pressure control difficulty level Dp2 calculated in step 109 is input to the supercharging pressure control difficulty level Dp, and the routine ends. In this case, in step 11 of FIG. 6, the EGR ratio control difficulty level De2 calculated in step 109 is acquired as the EGR ratio control difficulty level De, and the supercharging pressure control difficulty level Dp2 calculated in step 109 is acquired as the supercharging pressure control difficulty level Dp.

Meanwhile, in step 108, when it is determined that the inequation of ΔPim ≥ ΔPimMaxN is established and the routine proceeds to step 111, the inequation of ΔRegr > ΔRegrMaxP and ΔPimMaxN ≤ ΔPim ≤ ΔPimMaxP is established since it is determined that the inequation of ΔRegr > ΔRegrMaxP is established in step 104, it is determined that the inequation of ΔPim ≤ ΔPimMaxP is established in step 105, and it is determined that the inequation of ΔPim ≥ ΔPimMaxN is established in step 108. Accordingly, the engine operation state at this time becomes the state of the regions indicated by the reference numerals De3 and Dp3 of FIG. 13. In this case, in step 111, the EGR ratio control difficulty level De3 is calculated according to the aforementioned equation 1, and zero is input to the supercharging pressure control difficulty level Dp3. Subsequently, the EGR ratio control difficulty level De3 calculated in step 111 is input to the EGR control difficulty level De in step 112, the supercharging pressure control difficulty level Dp3 to which zero is input in step 112 is input to the supercharging pressure control difficulty level Dp, and the routine ends. In this case, in step 11 of FIG. 6, the EGR ratio control difficulty level De3 calculated in step 111 is acquired as the EGR ratio control difficulty level De, and the supercharging pressure control difficulty level Dp3 to which zero is input in step 111 is acquired as the supercharging pressure control difficulty level Dp.

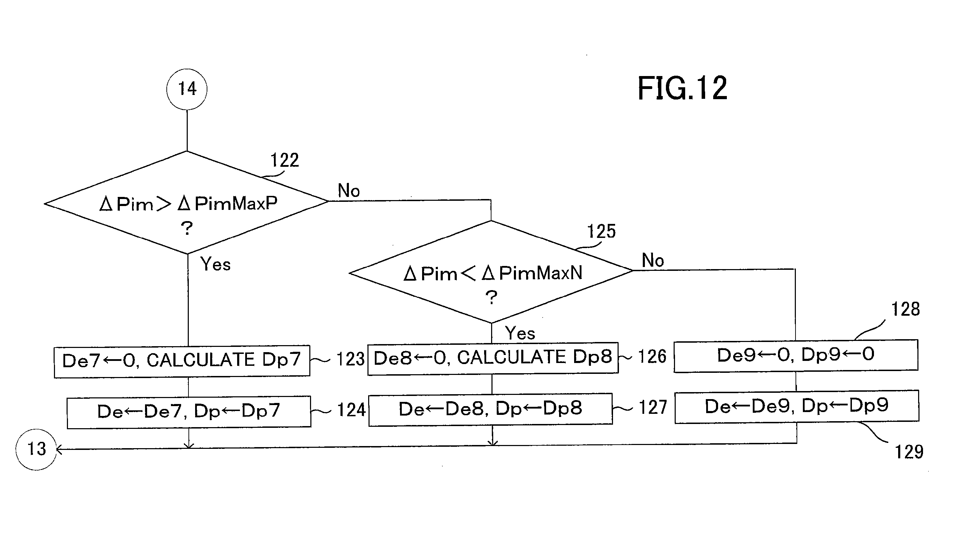

In step 104, when it is determined that the inequation of ΔRegr ≤ ΔRegrMaxP is established and the routine proceeds to step 113 of FIG. 11, it is determined whether the EGR ratio deviation ΔRegr calculated in step 103 is smaller than the negative maximum EGR ratio deviation ΔRegrMaxN (ΔRegr < ΔRegrMaxN). Here, when it is determined that the inequation of ΔRegr < ΔRegrMaxN is established, the routine proceeds to step 114. Meanwhile, when it is determined that the inequation of ΔRegr ≥ ΔRegrMaxN is established, the routine proceeds to step 122 of FIG. 12.

In step 113, when it is determined that the inequation of ΔRegr < ΔRegrMaxN is established and the routine proceeds to step 114, it is determined whether the supercharging pressure deviation ΔPim calculated in step 103 is larger than the positive maximum supercharging pressure deviation ΔPimMaxP (ΔPim > ΔPimMaxP). Here, when it is determined that the inequation of ΔPim > ΔPimMaxP is established, the routine proceeds to step 115. Meanwhile, when it is determined that the inequation of ΔPim ≤ ΔPimMaxP is established, the routine proceeds to step 117.

In step 114, when it is determined that the inequation of ΔPim > ΔPimMaxP is established and the routine proceeds to step 115, the inequation of ΔRegr < ΔRegrMaxN and ΔPim > ΔPimMaxP is established since it is determined that the inequation of ΔRegr < ΔRegrMaxN is established in step 113. Accordingly, the engine operation state at this time becomes the state of the regions indicated by the reference numerals De4 and Dp4 in FIG. 13. In this case, in step 115, the EGR ratio control difficulty level De4 is calculated according to the aforementioned equation 2, and the supercharging pressure control difficulty level Dp4 is calculated according to the aforementioned equation 3. Subsequently, in step 116, the EGR ratio control difficulty level De4 calculated in step 115 is input to the EGR ratio control difficulty level De, the supercharging pressure control difficulty level Dp4 calculated in step 115 is input to the supercharging pressure control difficulty level Dp, and the routine ends. In this case, in step 11 of FIG. 6, the EGR ratio control difficulty level De4 calculated in step 115 is acquired as the EGR ratio control difficulty level De, and the supercharging pressure control difficulty level Dp4 calculated in step 115 is acquired as the supercharging pressure control difficulty level Dp.

Meanwhile, in step 114, when it is determined that the inequation of ΔPim ≤ ΔPimMaxP is established and the routine proceeds to step 117, it is determined whether the supercharging pressure deviation ΔPim calculated in step 103 is smaller than the negative maximum supercharging pressure deviation ΔPimMaxN (ΔPim < ΔPimMaxN). Here, when it is determined that the inequation of ΔPim < ΔPimMaxN is established, the routine proceeds to step 118. Meanwhile, when it is determined that the inequation of ΔPim ≥ ΔPimMaxN is established, the routine proceeds to step 120.

In step 117, when it is determined that the inequation of ΔPim < ΔPimMaxN is established and the routine proceeds to step 118, the inequation of ΔRegr < ΔRegrMaxN and ΔPim < ΔPimMaxN is established since it is determined that the inequation of ΔRegr < ΔRegrMaxN is established in step 113. Accordingly, the engine operation state at this time becomes the state of the regions indicated by the reference numerals De5 and Dp5 in FIG. 13. In this case, in step 118, the EGR ratio control difficulty level De5 is calculated according to the aforementioned equation 2, and the supercharging pressure control difficulty level Dp5 is calculated according to the aforementioned equation 4. Subsequently, in step 119, the EGR ratio control difficulty level De5 calculated in step 118 is input to the EGR control difficulty level De, the supercharging pressure control difficulty level Dp5 calculated in step 118 is input to the supercharging pressure control difficulty level Dp, and the routine ends. In this case, in step 11 of FIG. 6, the EGR ratio control difficulty level De5 calculated in step 118 is acquired as the EGR ratio control difficulty level De, and the supercharging pressure control difficulty level Dp5 calculated in step 118 is acquired as the supercharging pressure control difficulty level Dp.

Meanwhile, in step 117, when it is determined that the inequation of ΔPim ≥ ΔPimMaxN is established and the routine proceeds to step 120, the inequation of ΔRegr < ΔRegrMaxN and ΔPimMaxN ≤ ΔPim ≤ ΔPimMaxP is established since it is determined that the inequation of ΔRegr < ΔRegrMaxN is established step 113, it is determined that the inequation of ΔPim ≤ ΔPimMaxP is established in step 114, and it is determined that the inequation of ΔPim ≥ ΔPimMaxN is established in step 117. Accordingly, the engine operation state at this time becomes state of the regions indicated by the reference numerals De6 and Dp6 in FIG. 13. In this case, in step 120, the EGR ratio control difficulty level De6 is calculated according to the aforementioned equation 2, and zero is input to the supercharging pressure control difficulty level Dp6. Subsequently, in step 121, the EGR ratio control difficulty level De6 calculated in step 120 is input to the EGR control difficulty level De, the supercharging pressure control difficulty level Dp6 to which zero is input in step 120 is input to the supercharging pressure control difficulty level Dp, and the routine ends. In this case, in step 11 of FIG. 6, the EGR ratio control difficulty level De6 calculated in step 120 is acquired as the EGR ratio control difficulty level De, and the supercharging pressure control difficulty level Dp6 to which zero is input in step 120 is acquired as the supercharging pressure control difficulty level Dp.

In step 113, when it is determined that the inequation of ΔRegr ≥ ΔRegrMaxN is established and the routine proceeds to step 122 of FIG. 12, it is determined whether the supercharging pressure deviation ΔPim calculated in step 103 is larger than the positive maximum EGR ratio deviation ΔRegrMaxP (ΔPim > ΔPimMaxP). Here, when it is determined that the inequation of ΔPim > ΔPimMaxP is established, the routine proceeds to step 123. Meanwhile, when it is determined that the inequation of $\Delta Pim \leq \Delta PimRegrMaxP$ is established, the routine proceeds to step 125.

In step 122, when it is determined that the inequation of $\Delta Pim > \Delta PimMaxP$ is established and the routine proceeds to step 123, the inequation of $\Delta RegrMaxN \leq \Delta Regr \leq \Delta RegrMaxP$ and $\Delta Pim > \Delta PimMaxP$ is established since it is determined that the inequation of $\Delta Regr \leq \Delta RegrMaxP$ is established in step 104 and it is determined that the inequation of $\Delta Regr \geq \Delta RegrMaxN$ is established in step 113. Accordingly, the engine operation state at this time becomes the state of the regions indicated by the reference numerals De7 and Dp7 in FIG. 13. In this case, in step 123, zero is input to the EGR ratio control difficulty level De7, and the supercharging pressure control difficulty level Dp7 is calculated according to the aforementioned equation 3. Subsequently, in step 124, the EGR ratio control difficulty level De7 to which zero is input in step 123 is input to the EGR ratio control difficulty level De, the supercharging pressure control difficulty level Dp7 calculated in step 123 is input to the supercharging pressure control difficulty level Dp, and the routine ends. In this case, in step 11 of FIG. 6, the EGR ratio control difficulty level De7 to which zero is input in step 123 is acquired as the EGR ratio control difficulty level De, and the supercharging pressure control difficulty level Dp7 calculated in step 123 is acquired as the supercharging pressure control difficulty level Dp.

Meanwhile, in step 122, when it is determined that the inequation of $\Delta Pim \leq \Delta PimMaxP$ is established and the routine proceeds to step 125, it is determined whether the supercharging pressure deviation $\Delta Pim$ calculated in step 103 is smaller than the negative maximum supercharging pressure deviation $\Delta PimMaxN$ ($\Delta Pim < \Delta PimMaxN$). Here, when it is determined that the inequation of $\Delta Pim < \Delta PimMaxN$ is established, the routine proceeds to step 126. Meanwhile, when it is determined that the inequation of $\Delta Pim \geq \Delta PimMaxN$ is established, the routine proceeds to step 128.

In step 125, when it is determined that the inequation of $\Delta Pim < \Delta PimMaxN$ is established and the routine proceeds to step 126, the inequation of $\Delta RegrMaxN \leq \Delta Regr \leq \Delta RegrMaxP$ and $\Delta Pim < \Delta PimMaxN$ is established since it is determined that the inequation of $\Delta Regr \leq \Delta RegrMaxP$ is established in step 104 and it is determined that the inequation of $\Delta Regr \geq \Delta RegrMaxN$ is established in step 113. Accordingly, the engine operation state at this time becomes the state of the regions indicated by the reference numerals De8 and Dp58 in FIG. 13. In this case, in step 126, zero is input to the EGR ratio control difficulty level De8, and the supercharging pressure control difficulty level Dp8 is calculated according to the aforementioned equation 4. Subsequently, in step 127, the EGR ratio control difficulty level De8 to which zero is input in step 126 is input to the EGR control difficulty level De, the supercharging pressure control difficulty level Dp8 calculated in step 126 is input to the supercharging pressure control difficulty level Dp, and the routine ends. In this case, in step 11 of FIG. 6, the EGR ratio control difficulty level De8 to which zero is input in step 126 is acquired as the EGR ratio control difficulty level De, and the supercharging pressure control difficulty level Dp8 calculated in step 126 is acquired as the supercharging pressure control difficulty level Dp.

Meanwhile, in step 125, when it is determined that the inequation of $\Delta Pim \geq \Delta PimMaxN$ is established and the routine proceeds to step 128, the inequation of $\Delta RegrMaxN \leq \Delta Regr \leq \Delta RegrMaxP$ and $\Delta PimMaxN \leq \Delta Pim \leq \Delta PimMaxP$ is established since it is determined that the inequation of $\Delta Regr \leq \Delta RegrMaxP$ is established in step 104, it is determined that the inequation of $\Delta Regr \geq \Delta RegrMaxN$ is established in step 113, it is determined that the inequation of $\Delta Pim \leq \Delta PimMaxP$ is established in step 122, and it is determined that the inequation of $\Delta Pim \geq \Delta PimMaxN$ is established in step 125. Accordingly, the engine operation state at this time becomes the state of the regions indicated by the reference numerals De9 and Dp9 in FIG. 13. In this case, in step 128, zero is input to the EGR ratio control difficulty level De9, and zero is input to the supercharging pressure control difficulty level Dp9. Subsequently, in step 129, the EGR ratio control difficulty level De9 to which zero is input in step 128 is input to the EGR control difficulty level De, the supercharging pressure control difficulty level Dp9 to which zero is input in step 128 is input to the supercharging pressure control difficulty level Dp, and the routine ends. In this case, in step 11 of FIG. 6, the EGR ratio control difficulty level De9 to which zero is input in step 128 is acquired as the EGR ratio control difficulty level De, and the supercharging pressure control difficulty level Dp9 to which zero is input in step 120 is acquired as the supercharging pressure control difficulty level Dp.

In addition, in the aforementioned embodiment, the present invention is applied to the self-ignition type internal combustion engine (a so-called diesel engine). However, the present invention may be also applied to a spark ignition type internal combustion engine (a so-called gasoline engine).

## Claims

1. A control device for an internal combustion engine including two different control subjects as a first control subject and a second control subject respectively capable of directly controlling a first control amount and a second control amount as two different control amounts interacting with each other, the control device for an internal combustion engine comprising:

   a target value setting means for setting a target value of the first control amount as a first target control amount and setting a target value of the second control amount as a second target control amount; and

a control amount control means for controlling the first control amount at the first target control amount by controlling an operation state of the first control subject and controlling the second control amount at the second target control amount by controlling an operation state of the second control subject;

wherein the first target control amount is set as the target value of the first control amount capable of controlling the first control amount with a predetermined followability taking account of at least one of a first operation speed as an operation speed of the first control subject when the control amount control means gives an instruction for changing the operation state of the first control subject to the first control subject and a degree of influence of the first control subject on the first control amount as a degree of influence on the first control amount due to a change in the operation state of the first control subject and at least one of a second operation speed as an operation speed of the second control subject when the control amount control means gives an instruction for changing the operation state of the second control subject to the second control subject and a degree of influence of the second control subject on the first control amount as a degree of influence on the first control amount due to a change in the operation state of the second control subject.

2. The control device for an internal combustion engine according to claim 1,
wherein, in the case where the first operation speed when the operation state of the first control subject is changed so as to increase the first control amount so that the first control amount is controlled at the first target control amount is taken into account in the setting of the first target control amount, a first increase operation speed, which is the first operation speed when the operation state of the first control subject is changed so as to increase the first control amount, is taken into account as the first operation speed in the setting of the first target control amount, and in the case where the first operation speed when the operation state of the first control subject is changed so as to decrease the first control amount so that the first control amount is controlled at the first target control amount is taken into account in the setting of the first target control amount, a first decrease operation speed, which is the first operation speed when the operation state of the first control subject is changed so as to decrease the first control amount, is taken into account as the first operation speed in the setting of the first target control amount.

3. The control device for an internal combustion engine according to any one of claims 1 and 2,
wherein, in the case where the second operation speed when the operation state of the second control subject is changed so as to increase the second control amount so that the second control amount is controlled at the second target control amount is taken into account in the setting of the first target control amount, a second increase operation speed, which is the second operation speed when the operation state of the second control subject is changed so as to increase the second control amount, is taken into account as the second operation speed in the setting of the first target control amount, and in the case where the second operation speed when the operation state of the second control subject is changed so as to decrease the second control amount so that the second control amount is controlled at the second target control amount is taken into account in the setting of the first target control amount, a second decrease operation speed, which is the second operation speed when the operation state of the second control subject is changed so as to decrease the second control amount, is taken into account as the second operation speed in the setting of the first target control amount.

4. The control device for an internal combustion engine according to any one of claims 1 to 3,
wherein the target value of the first control amount in accordance with the operation state of the internal combustion engine when the operation state of the internal combustion engine is in a constant operation state is set as a first target constant control amount, an index representing the possibility that the first current control amount is controlled at the first target constant control amount with the predetermined followability when the first current control amount is controlled at the first target constant control amount set in accordance with the current operation state of the internal combustion engine on assumption that the current operation state of the internal combustion engine is in the constant operation state is calculated as a first following index based on at least one of the first operation speed and a degree of influence of the first control subject on the first control amount and at least one of the second operation speed and a degree of influence of the second control subject on the first control amount, and the first target control amount is set in accordance with the first following index; so that at least one of the first operation speed and a degree of influence of the first control subject on the first control amount and at least one of the second operation speed and a degree of influence of the second control subject on the first control amount are taken into account in the setting of the first target control amount.

5. The control device for an internal combustion engine according to claim 4,
wherein the deviation of the first current control amount with respect to the first target constant control amount set in accordance with the current operation state of the internal combustion engine on assumption that the current operation state of the internal combustion engine is the constant operation state is calculated as a first control amount deviation, a value in which the first control amount deviation is corrected in accordance with the first following index is calculated as a first control amount correction deviation, and a value in which the first control amount correction deviation is added to the first current control amount is set as the first target control amount; so that at least one of the first operation speed and a degree of influence of the first control subject on to the first control amount and at least one of the second operation speed and a degree of influence of the second control subject on the first control amount are taken into account in the setting of the first target control amount.

6. The control device for an internal combustion engine according to claim 5,
wherein when the first control amount deviation is smaller than a predetermined value, a value in which the first control amount deviation is added to the first current control amount is set as the first target control amount.

7. The control device for an internal combustion engine according to any one of claims 1 to 6,
wherein the second target control amount is set as the target value of the second control amount capable of controlling the second control amount with a predetermined followability taking account of at least one of the first operation speed and a degree of influence of the first control subject on the second control amount as the degree of the influence on the second control amount due to a change in the operation state of the first control subject and at least one of the second operation speed and a degree of influence of the second control subject on the second control amount as the degree of the influence on the second control amount due to a change in the operation state of the second control subject.

8. The control device for an internal combustion engine according to claim 7,
wherein, in the case where the second operation speed when the operation state of the second control subject is changed so as to increase the second control amount so that the second control amount is controlled at the second target control amount is taken into account in the setting of the second target control amount, a second increase operation speed, which is the second operation speed when the operation state of the second control subject is changed so as to increase the second control amount, is taken into account as the second operation speed in the setting of the second target control amount, and in the case where the second operation speed when the operation state of the second control subject is changed so as to decrease the second control amount so that the second control amount is controlled at the second target control amount is taken into account in the setting of the second target control amount, a second decrease operation speed, which is the second operation speed when the operation state of the second control subject is changed so as to decrease the second control amount, is taken into account as the second operation speed in the setting of the second target control amount.

9. The control device for an internal combustion engine according to any one of claims 7 and 8,
wherein, in the case where the first operation speed when the operation state of the first control subject is changed so as to increase the first control amount so that the first control amount is controlled at the first target control amount is taken into account in the setting of the second target control amount, a first increase operation speed, which is the first operation speed when the operation state of the first control subject is changed so as to increase the first control amount, is taken into account as the first operation speed in the setting of the second target control amount, and in the case where the first operation speed when the operation state of the first control subject is changed so as to decrease the first control amount so that the first control amount is controlled at the first target control amount is taken into account in the setting of the second target control amount, a first decrease operation speed, which is the first operation speed when the operation state of the first control subject is changed so as to decrease the first control amount, is taken into account as the first operation speed in the setting of the second target control amount.

10. The control device for an internal combustion engine according to any one of claims 7 to 9,
wherein the target value of the second control amount in accordance with the operation state of the internal combustion engine when the operation state of the internal combustion engine is in the constant operation state is set as a second target constant control amount, an index representing the possibility that the second current control amount is controlled at the second target constant control amount with the predetermined followability when the second current control amount is controlled at the second target constant control amount set in accordance with the current operation state of the internal combustion engine on assumption that the current operation state of the internal combustion engine is in the constant operation state is calculated as a second following index based on at least one of the first operation speed and a degree of influence of the first control subject on the second control amount and at least one of the second operation speed and a degree of influence of the second control subject on the second control amount, and the second target control amount is set in accordance with the second following index; so that at least one of the first operation speed and a degree of influence of the first control subject on the second control amount and at least one of the second operation speed and a degree of influence of the second control subject on the second control amount are taken into account in the setting of the second target control amount.

11. The control device for an internal combustion engine according to claim 10,
wherein the deviation of the second current control amount with respect to the second target constant control amount set in accordance with the current operation state of the internal combustion engine on assumption that the current operation state of the internal combustion engine is the constant operation state is calculated as a second control amount deviation, a value in which the second control amount deviation is corrected in accordance with the second following index is calculated as a second control amount correction deviation, and a value in which the second control amount correction deviation is added to the second current control amount is set as the second target control amount; so that at least one of the first operation speed and a degree of influence of the first control subject on the second control amount and at least one of the second operation speed and a degree of influence of the second control subject on the second control amount are taken into account in the setting of the second target control amount.

12. The control device for an internal combustion engine according to claim 11,
wherein when the second control amount deviation is smaller than a predetermined value, a value in which the second control amount deviation is added to the second current control amount is set as the second target control amount.

FIG.1

EXHAUST GAS INFLOW DIRECTION

MINIMUM EXHAUST GAS INFLOW AMOUNT

MAXIMUM EXHAUST GAS INFLOW AMOUNT

FIG.2

(A)

(B)

FIG.3

(A)

(B)

FIG.4

FIG.5

CALCULATE TARGET EGR RATIO AND
TARGET SUPERCHARGING PRESSURE

ACQUIRE Regr, Pim ~ 10

AQUIRE De, Dp ~ 11

ACQUIRE Ke, Kp ~ 12

CALCULATE TRegr, TPim ~ 13

RETURN

FIG.6

(A)

Re

Egr(%)

(B)

Rv

Vn(%)

(C)

Rt

Th(%)

FIG.7

FIG.8

CALCULATE CONTROL
DIFFICULTY LEVEL

ACQUIRE TPims, TO2s ⌇~ 100

ACQUIRE Regr, Pim ⌇~ 101

CALCULATE TRegrs ⌇~ 102

CALCULATE $\Delta$ Regr, $\Delta$ Pim ⌇~ 103

11

FIG.9

図10

EP 2 604 834 A1

(11)

104

$\Delta\,Regr > \Delta\,RegrMaxP$ ?

No → (12)

Yes

105

$\Delta\,Pim > \Delta\,PimMaxP$ ?

No

108

$\Delta\,Pim < \Delta\,PimMaxN$ ?

No

Yes

Yes

| CALCULATE De1, Dp1 |～106
| CALCULATE De2, Dp2 |～109
| CALCULATE De3, Dp3←0 |～111

| De←De1, Dp←Dp1 |～107
| De←De2, Dp←Dp2 |～110
| De←De3, Dp←Dp3 |～112

(13)

RETURN

FIG.11

## FIG.12

(14)

122

$\Delta Pim > \Delta PimMaxP$ ?

No

Yes

125

$\Delta Pim < \Delta PimMaxN$ ?

No

128

Yes

| De7←0, CALCULATE Dp7 | ~123 | De8←0, CALCULATE Dp8 | ~126 | De9←0, Dp9←0 |

| De←De7, Dp←Dp7 | ~124 | De←De8, Dp←Dp8 | ~127 | De←De9, Dp←Dp9 |

129

(13)

FIG.13

**INTERNATIONAL SEARCH REPORT**

| International application No. |
| --- |
| PCT/JP2010/063800 |

| A. CLASSIFICATION OF SUBJECT MATTER |
| --- |
| *F02D45/00*(2006.01)i |

According to International Patent Classification (IPC) or to both national classification and IPC

| B. FIELDS SEARCHED |
| --- |

Minimum documentation searched (classification system followed by classification symbols)
F02D45/00, F02D21/00

Documentation searched other than minimum documentation to the extent that such documents are included in the fields searched

| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2005-233033 A (Denso Corp.), 02 September 2005 (02.09.2005), paragraphs [0009] to [0024] & US 2005/0178123 A1 & EP 1571321 A2 & CN 1657751 A | 1-12 |
| A | JP 2010-13992 A (Fuji Heavy Industries Ltd.), 21 January 2010 (21.01.2010), paragraphs [0011] to [0013] (Family: none) | 1-12 |
| A | JP 2010-116781 A (Honda Motor Co., Ltd.), 27 May 2010 (27.05.2010), paragraphs [0009] to [0018] & EP 2184469 A2 | 1-12 |

| ☐ Further documents are listed in the continuation of Box C. | ☐ See patent family annex. |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 October, 2010 (05.10.10) | 19 October, 2010 (19.10.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009275620 A
- JP 2001355501 A
- JP H1113511 A
- JP 2008031951 A